# EUROPÄISCHE PATENTSCHRIFT

(11) **EP 3 338 133 B1**
(45) Veröffentlichungstag und Bekanntmachung des Hinweises auf die Patenterteilung: **03.06.2020**
(21) Anmeldenummer: 16763208.2
(22) Anmeldetag: 18.08.2016
(51) Int. Cl.: G02B 13/06, G02B 5/00, G02B 26/08, G02B 27/64, H04N 5/232

(54) **VORRICHTUNG MIT EINER MULTIKANALABBILDUNGSVORRICHTUNG UND VERFAHREN ZUM HERSTELLEN DERSELBEN**
DEVICE HAVING A MULTI-CHANNEL IMAGING DEVICE AND METHOD FOR PRODUCING SAME
DISPOSITIF COMPRENANT UN DISPOSITIF DE REPRODUCTION À MULTIPLES CANAUX ET SON PROCÉDÉ DE FABRICATION

(30) Priorität: 19.08.2015 DE 102015215841
(43) Veröffentlichungstag der Anmeldung: 27.06.2018
(73) Patentinhaber: Fraunhofer-Gesellschaft zur Förderung der angewandten Forschung e.V., 80686 München (DE)
(72) Erfinder: WIPPERMANN, Frank, 98617 Meiningen (DE); BRÜCKNER, Andreas, 07743 Jena (DE); BRÄUER, Andreas, 07646 Schlöben (DE); OBERDÖRSTER, Alexander, 07749 Jena (DE)
(74) Vertreter: König, Andreas Rudolf
(86) Internationale Anmeldenummer: PCT/EP2016/069644
(87) Internationale Veröffentlichungsnummer: WO 2017/029375

(56) Entgegenhaltungen:
- US-A1- 2007 247 540
- US-A1- 2010 045 773

## Beschreibung

Die vorliegende Erfindung bezieht sich auf eine Vorrichtung mit einer Multikanalabbildungsvorrichtung und auf ein Verfahren zum Herstellen derselben. Die vorliegende Erfindung bezieht sich ferner auf eine tragbare Vorrichtung mit einer Multiaperturabbildungsvorrichtung.

Konventionelle Kameras übertragen in einem Kanal das gesamte Gesichtsfeld und sind in ihrer Miniaturisierung begrenzt. In mobilen Vorrichtungen wie etwa Smartphones werden zwei Kameras genutzt, die in und entgegen dem Richtungssinn der Flächennormalen des Displays orientiert sind.

In US 2010/045773 A1 ist ein optisches Panoramasystem beschrieben, das optische Mittel enthält, die eine oder mehrere Objektiv- und Relaisoptiken enthalten, um mindestens ein Bild zu fokussieren, das mindestens einen Teil einer im wesentlichen sphärischen Sichtfeldszene im Fokus auf eine Abbildungsebene darstellt, wobei die Gehäusemittel Haltemittel enthalten die optischen Mittel und Befestigungsmittel, die das optische Panoramasystem an einer benachbarten Kamera anbringen.

In US 2007/247540 A1 ist ein Bereitstellen einer Kamera beschrieben, mit der ein Fotograf ein Foto von sich selbst macht, während er seinen Gesichtsausdruck überprüft und ferner prüft, ob seine Augenlinie auf ein Objektiv der Kamera gerichtet ist.

Wünschenswert wäre demnach ein Konzept, das miniaturisierte Vorrichtungen zum Erfassen eines Gesamtgesichtsfeldes unter Gewährleistung einer hohen Bildqualität ermöglicht.

Die Aufgabe der vorliegenden Erfindung besteht deshalb darin, eine Vorrichtung und ein Verfahren zum Herstellen derselben zu schaffen, die eine miniaturisierte Ausführung der Vorrichtung und ein Erhalten von Bildern in einer hohen Qualität ermöglichen.

Diese Aufgabe wird durch den Gegenstand der unabhängigen Patentansprüche gelöst.

Ein Kerngedanke der vorliegenden Erfindung besteht darin, erkannt zu haben, dass obige Aufgabe dadurch gelöst werden kann, dass eine Umlenkung von Strahlengängen optischer Kanäle eine Erfassung von verschiedenen Gesichtsfeldern mit einer Multiaperturabbildungsvorrichtung ermöglicht ist, was eine Miniaturisierung ermöglicht, und dass durch Blenden nicht genutzte transparente Bereiche für nicht genutzte Richtungen der Strahlengänge verschlossen werden können, so dass ein Eintritt von Falschlicht reduziert ist und eine hohe Qualität der Bilder erhalten werden kann.

Gemäß einem Ausführungsbeispiel umfasst eine Vorrichtung ein Gehäuse mit einem ersten transparenten Bereich und einem zweiten transparenten Bereich und eine Abbildungsvorrichtung, die in einem Inneren des Gehäuses angeordnet ist und eine Strahlumlenkeinrichtung umfasst. Die Vorrichtung umfasst eine erste Blende und eine zweite Blende. Die Vorrichtung weist einen ersten Betriebszustand und einen zweiten Betriebszustand auf. In dem ersten Betriebszustand lenkt die Strahlumlenkeinrichtung einen Strahlengang der Abbildungsvorrichtung so um, dass dieser durch den ersten transparenten Bereich verläuft und die zweite Blende den zweiten transparenten Bereich optisch zumindest teilweise verschließt. In dem zweiten Betriebszustand lenkt die Strahlumlenkeinrichtung den Strahlengang der Abbildungsvorrichtung so um, dass dieser durch den zweiten transparenten Bereich verläuft und die erste Blende den ersten transparenten Bereich optisch zumindest teilweise verschließt, wodurch für die Vorrichtung eine erste Blickrichtung hin zu einem ersten Gesamtgesichtsfeld eingestellt wird. In dem zweiten Betriebszustand lenkt die Strahlumlenkeinrichtung den Strahlengang der Multiaperturabbildungsvorrichtung so, dass dieser durch den zweiten transparenten Bereich verläuft, und die erste Blende den ersten transparenten Bereich optisch zumindest teilweise verschließt, wodurch für die Vorrichtung eine zweite Blickrichtung hin zu einem zweiten Gesamtgesichtsfeld eingestellt wird. Das Umschalten zwischen dem ersten Betriebszustand und dem zweiten Betriebszustand basiert auf einer Rotationsbewegung der Strahlumlenkeinrichtung basiert, wobei optische Kanäle der Multiaperturabbildungsvorrichtung von der Strahlumlenkeinrichtung basierend auf einer eingestellten Blickrichtung hin zu entweder dem ersten Gesamtgesichtsfeld oder dem zweiten Gesamtgesichtsfeld gelenkt werden und innerhalb der eingestellten Blickrichtung einen Winkel zueinander aufweisen, so dass die optischen Kanäle in höchstens teilweise überlappende Teilgesichtsfelder des jeweiligen Gesamtgesichtsfeldes gelenkt werden. Optische Kanäle weisen jeweils eine oder mehrere Optiken zum Verändern eines Strahlengangs der Abbildungsvorrichtung und einen Bildsensorbereich auf und werden von der Strahlumlenkeinrichtung in Richtung der eingestellten Blickrichtung umgelenkt.

Gemäß einem weiteren Ausführungsbeispiel umfasst ein Verfahren zum Herstellen einer Vorrichtung ein Bereitstellen eines Gehäuses mit einem ersten transparenten Bereich und einem zweiten transparenten Bereich, ein Anordnen einer Abbildungsvorrichtung, die eine Strahlumlenkeinrichtung umfasst, in einem Inneren des Gehäuses und ein Anordnen einer ersten Blende und einer zweiten Blende. Die erste und die zweite Blende werden so angeordnet, dass die Vorrichtung einen ersten Betriebszustand und einen zweiten Betriebszustand aufweist, so dass in dem ersten Betriebszustand die Strahlumlenkeinrichtung einen Strahlengang der Abbildungsvorrichtung so umlenkt, dass dieser durch den ersten transparenten Bereich verläuft und die zweite Blende den zweiten transparenten Bereich optisch zumindest teilweise verschließt. Das Anordnen der Blenden erfolgt so, dass in dem zweiten Betriebszustand die Strahlumlenkeinrichtung den Strahlengang der Abbildungsvorrichtung so umlenkt, dass dieser durch den zweiten transparenten Bereich verläuft und die erste Blende den ersten transparenten Bereich optisch zumindest teilweise verschließt, wodurch für die Vorrichtung eine erste Blickrichtung hin zu einem ersten Gesamtgesichtsfeld eingestellt wird. Das Verfahren wird ausgeführt, so dass in dem zweiten Betriebszustand die Strahlumlenkeinrichtung den Strahlengang der Abbildungsvorrichtung so umlenkt, dass dieser durch den zweiten transparenten Bereich verläuft, und die erste Blende den ersten transparenten Bereich optisch zumindest teilweise verschließt, wodurch für die Vorrichtung eine zweite Blickrichtung hin zu einem zweiten Gesamtgesichtsfeld eingestellt wird. Das Verfahren wird ausgeführt, so dass das Umschalten zwischen dem ersten Betriebszustand und dem zweiten Betriebszustand auf einer Rotationsbewegung (28) der Strahlumlenkeinrichtung (18) basiert. Das Verfahren wird ausgeführt, so dass optische Kanäle der Multiaperturabbildungsvorrichtung von der Strahlumlenkeinrichtung (18) basierend auf einer eingestellten Blickrichtung hin zu entweder dem ersten Gesamtgesichtsfeld oder dem zweiten Gesamtgesichtsfeld gelenkt werden und innerhalb einer Blickrichtung einen Winkel zueinander aufweisen, so dass die optischen Kanäle in höchstens teilweise überlappende Teilgesichtsfelder des jeweiligen Gesamtgesichtsfeldes gelenkt werden; und so dass optische Kanäle jeweils eine oder mehrere Optiken zum Verändern eines Strahlengangs der Abbildungsvorrichtung und einen Bildsensorbereich aufweisen und von der Strahlumlenkeinrichtung in Richtung der eingestellten Blickrichtung umgelenkt werden.

Basierend auf einem Verschließen von transparenten Bereichen, die von dem transparenten Bereich verschieden sind, durch den der Strahlengang gelenkt wird, kann ein Eintritt von Falschlicht in das Innere des Gehäuses reduziert oder verhindert werden. Dies ermöglicht eine hohe Bildqualität.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: eine schematische perspektivische Ansicht einer Vorrichtung gemäß einem Ausführungsbeispiel;
- Fig. 2: eine schematische Ansicht einer Hauptseite einer Vorrichtung gemäß einem weiteren Ausführungsbeispiel;
- Fig. 3a: eine Strahlumlenkeinrichtung und einen Zustand von Blenden in einem ersten Betriebszustand gemäß einem Ausführungsbeispiel;
- Fig. 3b: die Strahlumlenkeinrichtung, und die Blenden in einem zweiten Betriebszustand;
- Fig. 4a: eine schematische Ansicht der Strahlumlenkeinrichtung gemäß einem Ausführungsbeispiel, die eine Vielzahl von Strahlumlenkbereichen umfasst;
- Fig. 4b: eine schematische Ansicht der Strahlumlenkeinrichtung gemäß einer zu Fig.4a alternativen Konfiguration und gemäß einem Ausführungsbeispiel;
- Fig. 4c-g: eine vorteilhafte Ausgestaltung einer Strahlumlenkeinrichtung einer Abbildungsvorrichtung gemäß einem Ausführungsbeispiel.
- Fig. 5a: eine schematische perspektivische Ansicht einer Abbildungsvorrichtung gemäß einem Ausführungsbeispiel;
- Fig. 5b: eine schematische Seitenschnittansicht einer modifizierten Abbildungsvorrichtung, bei der die Strahlumlenkeinrichtung zwischen einer ersten Position des ersten Betriebszustands und einer zweiten Position rotatorischen umschaltbar ist;
- Fig. 6: eine schematische Ansicht eines Gesamtgesichtsfeldes, das vier einander überlappende Teilgesichtsfelder umfasst;
- Fig. 7: eine schematische perspektivische Ansicht einer Vorrichtung, die zwei Multiaperturabbildungsvorrichtungen umfasst, gemäß einem Ausführungsbeispiel; und
- Fig. 8: einen schematischen Aufbau umfassend eine erste Multiaperturabbildungsvorrichtung und eine zweite Multiaperturabbildungsvorrichtung mit einem gemeinsamen Bildsensor.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

In nachfolgend beschriebenen Ausführungsbeispielen wird Bezug genommen auf Hauptseiten und Nebenseiten einer Vorrichtung. Eine Hauptseite einer Vorrichtung kann hierin beschriebenen Ausführungsbeispielen als Seite eines Gehäuses oder der Vorrichtung verstanden werden, die verglichen mit anderen Seiten eine große oder eine größte Abmessung aufweist. Obwohl dies keine einschränkende Wirkung entfalten soll, kann beispielsweise eine erste Hauptseite eine Vorderseite und eine zweite Hauptseite eine Rückseite bezeichnen. Als Nebenseiten können Seiten oder Flächen verstanden werden, die die Hauptseiten miteinander verbinden.

Obwohl sich nachfolgend beschriebene Ausführungsbeispiele auf tragbare Vorrichtungen beziehen, können die dargelegten Aspekte ohne weiteres auf andere mobile oder immobile Vorrichtungen übertragen werden. Es versteht sich, dass beschriebene tragbare Vorrichtungen in anderen Vorrichtungen verbaut werden können, bspw. in Fahrzeugen. Ferner kann an Gehäuse einer Vorrichtung so gestaltet sein, dass nicht tragbar ist. Deshalb sollen die nachfolgend beschriebenen Ausführungsbeispiele nicht auf tragbare Vorrichtungen beschränkt sein, sondern können sich auf jegliche Implementierung einer Vorrichtung beziehen.

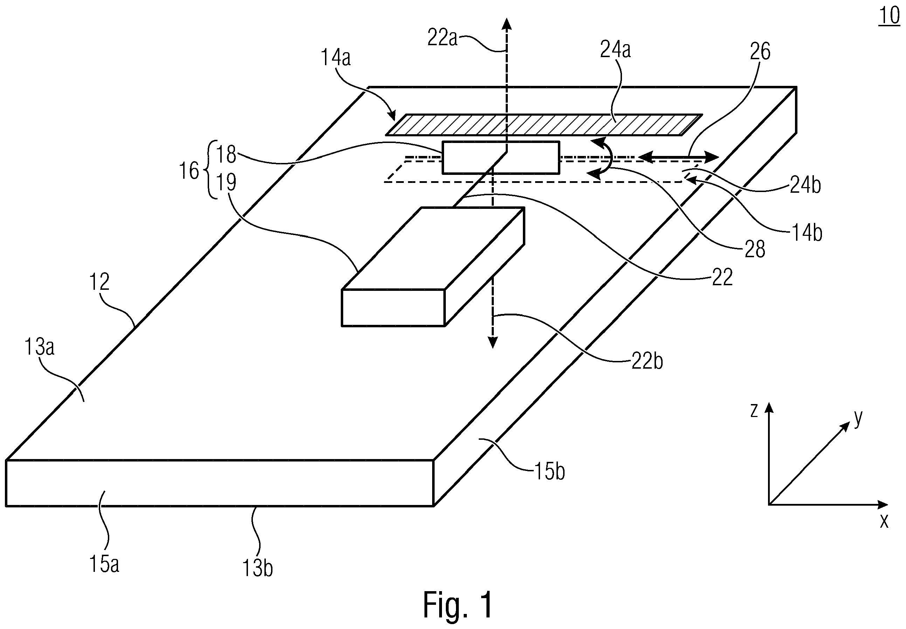

Fig. 1 zeigt eine schematische perspektivische Ansicht einer tragbaren Vorrichtung 10 gemäß einem Ausführungsbeispiel. Die tragbare Vorrichtung 10 umfasst ein Gehäuse 12 mit einem ersten transparenten Bereich 14a und einem zweiten transparenten Bereich 14b. Beispielsweise kann das Gehäuse 12 aus einem opaken Kunststoff, einem Metall oder dergleichen geformt sein. Die transparenten Bereiche 14a und/oder 14b können einstückig mit dem Gehäuse 12 gebildet sein oder mehrstückig gebildet sein. Die transparenten Bereiche 14a und/oder 14b können beispielsweise Aussparungen in dem Gehäuse 12 sein. Alternativ kann in einem Bereich der Aussparungen oder der transparenten Bereiche 14a und/oder 14b ein transparentes Material angeordnet sein. Transparente Materialen der transparenten Bereiche 14a und/oder 14b können zumindest in einem Wellenlängenbereich einer elektromagnetischen Strahlung transparent sein, für die eine Abbildungsvorrichtung 16 bzw. ein Bildsensor derselben empfänglich ist. Das bedeutet, dass die transparenten Bereiche 14a und/oder 14b in hiervon verschiedenen Wellenlängenbereichen teilweise oder vollständig opak ausgebildet sein können. Beispielsweise kann die Abbildungsvorrichtung 16 ausgebildet sein, um einen sichtbaren Wellenlängenbereich zu erfassen. Die transparenten Bereiche 14a und/oder 14b können beispielsweise in einem Ultraviolettbereich und/oder in einem Infrarotbereich teilweise oder vollständig opak oder intransparent ausgebildet sein.

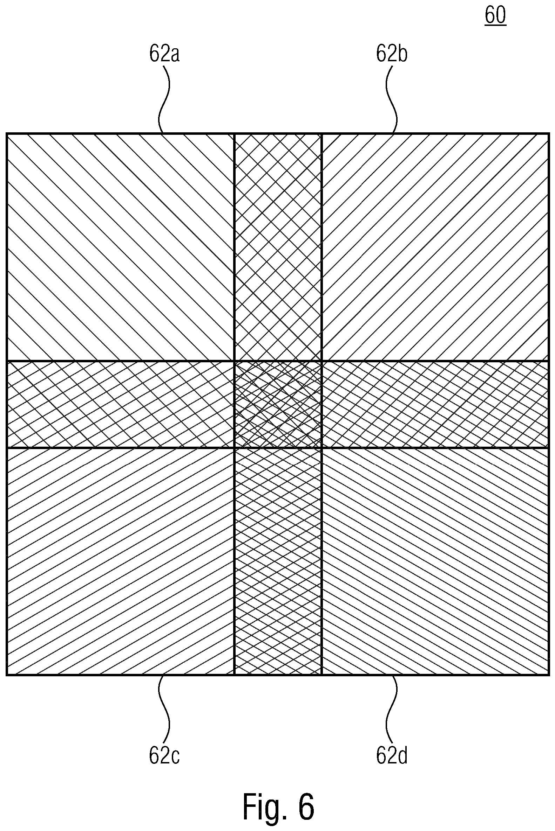

Die Abbildungsvorrichtung 10 ist einem Inneren des Gehäuses 12 angeordnet. Die Abbildungsvorrichtung 16 umfasst eine Strahlumlenkeinrichtung 18 und eine Bilderfassungseinrichtung 19. Die Bilderfassungseinrichtung 19 kann zwei oder mehrere optische Kanäle umfassen, die jeweils eine oder mehrere Optiken zum Verändern (etwa Bündeln, Fokussieren oder Streuen) eines Strahlengangs der Abbildungsvorrichtung 16 und einen Bildsensor aufweisen. Beispielsweise kann die Bilderfassungseinrichtung 19 einen oder mehrere Bildsensoren aufweisen, deren Strahlengänge durch einen oder mehrere optische Kanäle hindurch auf die Strahlumlenkeinrichtung 18 gelenkt und von dieser umgelenkt werden. Wie es im Zusammenhang mit Fig. 6 beschrieben ist, können die zumindest zwei optischen Kanäle so umgelenkt werden, dass sie einander überlappende Teilgesichtsfelder (Teilobjektbereiche) eines Gesamtgesichtsfeldes (Gesamtobjektbereich) erfassen. Die Abbildungsvorrichtung 16 kann als Multiaperturabbildungsvorrichtung bezeichnet werden.

Die tragbare Vorrichtung 10 weist einen ersten Betriebszustand und einen zweiten Betriebszustand auf. Der Betriebszustand kann mit einer Stellung, Position oder Orientierung der Strahlumlenkeinrichtung 18 korreliert sein. In dem ersten Betriebszustand kann die Strahlumlenkeinrichtung den Strahlengang 22 der Abbildungsvorrichtung 16 so umlenken, dass dieser durch den ersten transparenten Bereich 14a verläuft, wie es durch den Strahlengang 22a angedeutet ist. In dem zweiten Betriebszustand kann die Strahlumlenkeinrichtung 18 ausgebildet sein, um den Strahlengang 22 der Abbildungsvorrichtung 16 so umzulenken, dass dieser durch den zweiten transparenten Bereich 14b verläuft, wie es durch den Strahlengang 22b angedeutet ist. Dies kann auch so verstanden werden, dass die Strahlumlenkeinrichtung 18 den Strahlengang 22 zu einem Zeitpunkt und basierend auf dem Betriebszustand durch einen der transparenten Bereiche 14a und/oder 14b lenkt. Basierend auf dem Betriebszustand kann eine Position eines Gesichtsfeldes (Objektbereich), das von der Abbildungsvorrichtung 16 erfasst wird, im Raum veränderlich angeordnet sein.

Die tragbare Vorrichtung 10 umfasst eine erste Blende 24a und eine zweite Blende 24b. Die Blende 24a ist in einem Bereich des transparenten Bereichs 14a angeordnet und ist ausgebildet, um in einem geschlossenen Zustand der Blende 24a den transparenten Bereich 14a optisch zumindest teilweise zu verschließen. Gemäß einem Ausführungsbeispiel ist die Blende 24a ausgebildet, um in dem geschlossenen Zustand den transparenten Bereich 14a vollständig oder zumindest zu 50 %, 90 % oder zumindest zu 99 % der Fläche des transparenten Bereichs 14a zu verschließen. Die Blende 24b ist ausgebildet, um den transparenten Bereich 14b in gleicher oder ähnlicher Weise zu verschließen, wie es für die Blende 24a im Zusammenhang mit dem transparenten Bereich 14a beschrieben ist. In dem ersten Betriebszustand, in dem die Strahlumlenkeinrichtung 18 den Strahlengang 22 zum Strahlengang 22a umlenkt, kann die Blende 24b den transparenten Bereich 14b optisch zumindest teilweise verschließen, so dass durch den transparenten Bereich 14b Falschlicht in einem geringen Umfang oder ggf. nicht in das Innere des Gehäuses 12 eintritt. Dies ermöglicht eine geringe Beeinflussung der Aufnahme des Gesichtsfeldes im ersten Betriebszustand durch die Blende 14b eintretendes Falschlicht. In dem zweiten Betriebszustand, in dem beispielsweise der Strahlengang 22b aus dem Gehäuse 12 austritt, kann die Blende 24a den transparenten Bereich 14a optisch zumindest teilweise verschließen. Vereinfacht ausgedrückt, können die Blenden 24a und/oder 24b so ausgebildet sein, dass sie transparente Bereiche 14a bzw. 14b so verschließen, dass durch diese Falschlicht aus ungewollten Richtungen (in denen beispielsweise das erfasste Gesichtsfeld nicht angeordnet ist) in einem geringen Umfang eintritt oder nicht eintritt. Die Blenden 24a bzw. 24b können durchgehend gebildet sein und jeweils bzgl. aller optischen Kanäle der Abbildungsvorrichtung 16 angeordnet sein. Das bedeutet, die Blenden 24a und 24b können basierend auf dem jeweiligen Betriebszustand sind von allen optischen Kanälen der Multiaperturabbildungsvorrichtung genutzt werden. Gemäß einem Ausführungsbeispiel sind keine einzelnen runden Blenden für jeden optischen Kanal angeordnet sondern stattdessen eine Blende 24a bzw. 24b, die von allen optischen Kanälen genutzt wird. Die Blenden 24a und/oder 24b können einem Polygonzug folgend, bspw. rechteckig, oval, rund oder elliptisch geformt sein.

Ein Umschalten zwischen dem ersten und dem zweiten Betriebszustand kann beispielsweise eine Bewegung der Strahlumlenkeinrichtung 18 basierend auf einer translatorischen Bewegung 26 und/oder basierend auf einer rotatorischen Bewegung 28 umfassen.

Die Blenden 24a und/oder 24b können beispielsweise als mechanische Blende ausgebildet sein. Alternativ können die Blenden 24a und/oder 24b als elektrochrome Blende ausgebildet sein. Dies ermöglicht eine geringe Anzahl von mechanisch beweglichen Teilen. Ferner ermöglicht eine Ausgestaltung der Blenden 24a und/oder 24b als elektrochrome Blende ein geräuschloses Öffnen und/oder Verschließen der transparenten Bereiche 14a und/oder 14b sowie eine gute in eine Optik der tragbaren Vorrichtung 10 integrierbare Ausgestaltung. Beispielsweise können die Blenden 24a und/oder 24b so ausgeführt sein, dass sie in einem geschlossenen Zustand von einem Benutzer kaum oder nicht wahrgenommen werden, da sich wenig optische Unterschiede zu dem Gehäuse 12 ergeben.

Das Gehäuse 12 kann flach gebildet sein. Beispielsweise können Hauptseiten 13a und/oder 13b in einer x-/y-Ebene oder einer Ebene parallel hierzu im Raum angeordnet sein. Nebenseiten oder Nebenflächen 15a und/oder 15b zwischen den Hauptseiten 13a und 13b können schräg oder senkrecht hierzu im Raum angeordnet sein, wobei die Hauptseiten 13a und/oder 13b und/oder die Nebenseiten 15a und/oder 15b gekrümmt oder eben ausgebildet sein können. Eine Ausdehnung des Gehäuses 12 entlang einer ersten Gehäuserichtung z zwischen den Hauptseiten 13a und 13b, beispielsweise parallel oder antiparallel zu einer Oberflächennormalen einer Anzeige der tragbaren Vorrichtung 10, kann gering sein, wenn sie mit weiteren Abmessungen des Gehäuses 12 entlang weiteren Ausdehnungen, d.h. entlang einer Erstreckungsrichtung der Hauptseite 13a und/oder 13b verglichen wird. Die Nebenseiten 15a und 15b können parallel oder antiparallel zu der Oberflächennormalen einer Anzeige sein. Die Hauptseiten 13a und/oder 13b können senkrecht zu einer Oberflächennormalen einer Anzeige der tragbaren Vorrichtung 10 im Raum angeordnet sein. So kann beispielsweise eine Ausdehnung des Gehäuses entlang der x-Richtung und/oder der y-Richtung mindestens ein Dreifaches, mindestens ein Fünffaches oder mindestens ein Siebenfaches einer Ausdehnung des Gehäuses 12 entlang der ersten Ausdehnung z aufweisen. Die Ausdehnung des Gehäuses z kann vereinfachend, jedoch ohne einschränkende Wirkung, als Dicke oder Tiefe des Gehäuses 12 verstanden werden.

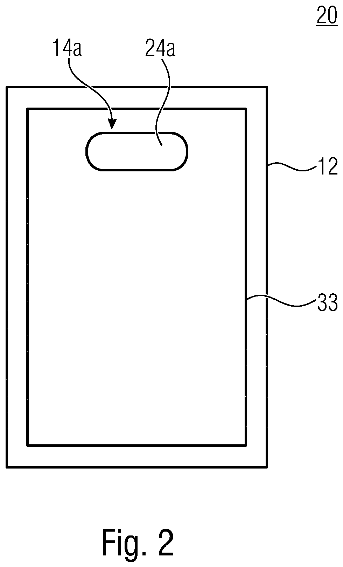

Fig. 2 zeigt eine schematische Ansicht einer Hauptseite einer tragbaren Vorrichtung 20 gemäß einem Ausführungsbeispiel. Die tragbare Vorrichtung kann die Vorrichtung 10 umfassen. Die tragbare Vorrichtung 20 kann eine Anzeige 33 umfassen, beispielsweise einen Bildschirm oder Display. Beispielsweise kann es sich bei der Vorrichtung 20 um eine tragbare Kommunikationsvorrichtung, wie etwa ein Mobiltelefon (Smartphone), einen Tablet-Computer, ein mobiles Musikabspielgerät, einen Monitor oder Bildschirmgerät, das die Abbildungsvorrichtung 16 aufweist, handeln. Der transparente Bereich 14a und/oder der transparente Bereich 14b können in einem Bereich des Gehäuses 12 angeordnet sein, in dem die Anzeige 33 angeordnet ist. Das bedeutet, dass die Blende 24a und/oder 24b in einem Bereich der Anzeige 33 angeordnet sein kann. Beispielsweise kann der transparente Bereich 14a und/oder 14b und/oder die Blende 24a bzw. 24b von der Anzeige 33 verdeckt sein. In einem Bereich der Anzeige 33, in dem die Blende 24a und/oder 24b angeordnet ist, kann zumindest zeitweise eine Information der Anzeige darstellbar sein. Bei dem Darstellen der Information kann es sich um einen beliebigen Betrieb der tragbaren Vorrichtung 20 handeln. Beispielsweise kann auf der Anzeige 33 eine Sucher-Funktion darstellbar sein, in welcher ein Gesichtsfeld darstellbar ist, das von der Abbildungsvorrichtung im Inneren des Gehäuses 12 abgetastet oder erfasst wird. Alternativ oder zusätzlich können bereits erfasste Bilder oder beliebige andere Informationen darstellbar sein. In einfachen Worten kann der transparente Bereich 14a und/oder die Blende 24a von der Anzeige 33 verdeckt sein, so dass der transparente Bereich 14a und/oder die Blende 24a während eines Betriebs der tragbaren Vorrichtung 20 kaum oder nicht wahrnehmbar ist.

Die transparenten Bereich 14a und 14b können jeweils in zumindest einer Hauptseite 13a des Gehäuses 12 und/oder in einer gegenüberliegenden Hauptseite angeordnet sein. In einfachen Worten kann das Gehäuse 12 einen transparenten Bereich vorne und einen transparenten Bereich hinten aufweisen. Hierzu sei angemerkt, dass die Begriffe vorne und hinten beliebig durch andere Begriffe, wie etwa links und rechts, oben und unten oder dergleichen ersetzt werden können, ohne hierin beschriebene Ausführungsbeispiele einzuschränken. Gemäß weiteren Ausführungsbeispielen können die transparenten Bereiche 14a und/oder 14b in einer Nebenseite angeordnet sein. Eine Anordnung der transparenten Bereiche kann beliebig und/oder abhängig von Richtungen, in welche die Strahlengänge der optischen Kanäle umlenkbar sind, sein,

In dem Bereich des transparente Bereichs 14a oder der Blende 24a kann die Anzeige 33 beispielsweise ausgebildet sein, um während eines Erfassens eines Bildes mit der Abbildungsvorrichtung zeitweise deaktiviert zu werden oder um eine Transparenz der Anzeige 33 aus dem Gehäuse 12 heraus zu erhöhen. Alternativ kann die Anzeige 33 in diesem Bereich auch aktiv bleiben, etwa wenn die Anzeige 33 keine oder kaum elektromagnetische Strahlung in einem relevanten Wellenlängenbereich in das Innere der tragbaren Vorrichtung 20 bzw. des Gehäuses 12 oder hin zu der Abbildungsvorrichtung 16 aussendet.

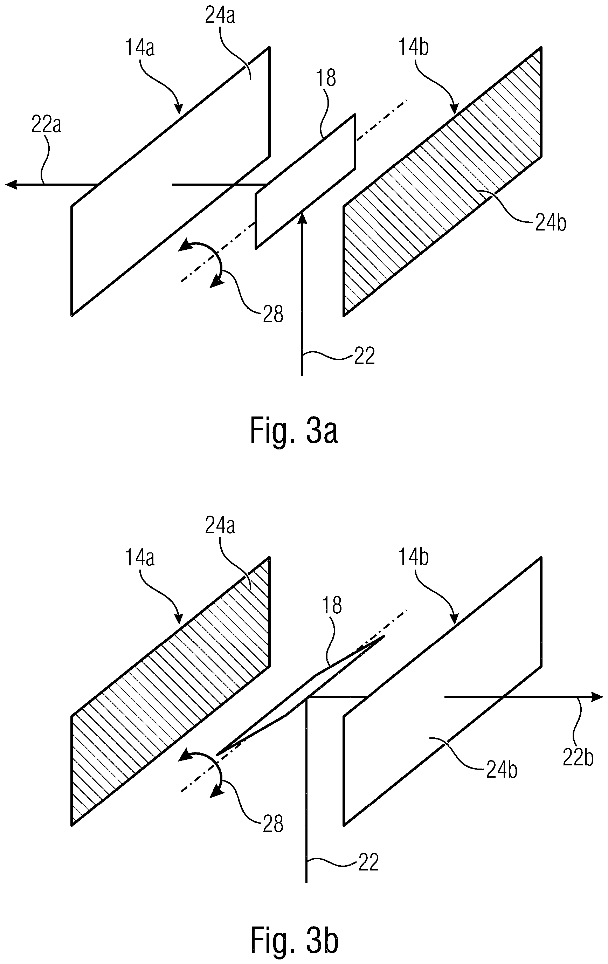

Fig. 3a zeigt die Strahlumlenkeinrichtung 18 und einen Zustand der ersten Blende 24a sowie der zweiten Blende 24b in dem ersten Betriebszustand. Die Strahlumlenkeinrichtung 18 lenkt beispielsweise den Strahlengang 22 so um, dass dieser als Strahlengang 22a durch den transparenten Bereich 14a verläuft. Die Blende 24b kann den transparenten Bereich 14b zeitweise zumindest teilweise verschließen, so dass durch den transparenten Bereich 14b Falschlicht in einem geringen oder keinem Umfang in das Innere des Gehäuses der tragbaren Vorrichtung eindringt.

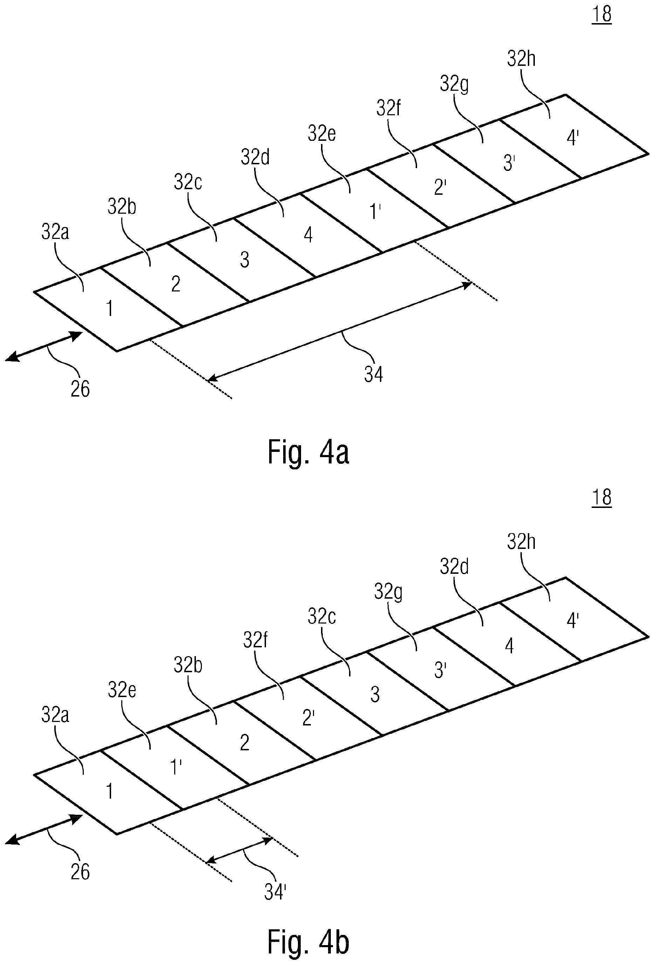

Fig. 3b zeigt die Strahlumlenkeinrichtung 18, die Blende 24a und die Blende 24b in dem zweiten Betriebszustand. Die Strahlumlenkeinrichtung 18 kann den Strahlengang 22 so umlenken, dass dieser als Strahlengang 22b durch den transparenten Bereich 14b verläuft, während die Blende 24a den transparenten Bereiche 14a optisch zumindest teilweise verschließt. In dem zweiten Betriebszustand kann die Blende 24b einen zumindest teilweise oder vollständig geöffneten Zustand aufweisen. Der geöffnete Zustand kann sich auf eine Transparenz der Blende beziehen. Bspw. kann eine elektrochrome Blende abhängig von einem Ansteuerungszustand als geöffnet oder geschlossen bezeichnet werden, ohne dass mechanische Komponenten bewegt werden. Eine als elektrochrome Blende ausgeführte Blende 24b kann zumindest zeitweise während des zweiten Betriebszustands für einen von der Abbildungsvorrichtung zu erfassenden Wellenlängenbereich teilweise oder vollständig transparent sein. In dem ersten Betriebszustand, wie er in Fig. 3a dargestellt ist, kann die Blende 24b für diesen Wellenlängenbereich teilweise oder vollständig intransparent oder opak sein. Ein Umschalten zwischen dem ersten Betriebszustand gemäß Fig. 3a und dem zweiten Betriebszustand gemäß Fig. 3b kann basierend auf der Rotationsbewegung 28 der Umlenkeinrichtung 18 und/oder basierend auf einer translatorischen Bewegung, wie es im Zusammenhang mit den Fig. 4a und 4b beschrieben ist, und erhalten werden oder zumindest eine dieser Bewegungen umfassen.

Fig. 4a zeigt eine schematische Ansicht der Strahlumlenkeinrichtung 18, die eine Vielzahl von Strahlumlenkbereichen 32a-h umfasst. Beispielsweise kann die Abbildungsvorrichtung eine Mehrzahl oder eine Vielzahl von optischen Kanälen umfassen, etwa zwei, vier oder eine höhere Anzahl. Weist die Abbildungsvorrichtung beispielsweise vier optische Kanäle auf, kann die Strahlumlenkeinrichtung 18 eine Anzahl von Strahlumlenkbereichen oder Strahlumlenkelemente 32a-h gemäß einer Anzahl der optischen Kanäle multipliziert mit einer Anzahl von Betriebszuständen, zwischen denen die Strahlumlenkeinrichtung 18 oder die tragbare Vorrichtung umschaltbar ist, umfassen. Beispielsweise können die Strahlumlenkbereiche 32a und 32e einem ersten optischen Kanal zugeordnet sein, wobei der Strahlumlenkbereich 32a den Strahlengang des ersten optischen Kanal in dem ersten Betriebszustand und der Strahlumlenkbereich 32e den Strahlengang des ersten optischen Kanals in dem ersten Betriebszustand umlenkt. In gleicher Weise können die Strahlumlenkbereiche 32b und 32f, 32c und 32g bzw. 32d und 32h weiteren optischen Kanälen zugeordnet sein.

Die Strahlumlenkeinrichtung kann entlang der translatorischen Bewegungsrichtung 26 translatorisch bewegbar sein kann und/oder zwischen einer ersten Stellung und einer zweiten Stellung der Strahlumlenkeinrichtung 18 bezüglich der optischen Kanäle der Abbildungsvorrichtung hin und her bewegbar sein, um zwischen dem ersten Betriebszustand und dem zweiten Betriebszustand zu wechseln. Eine Distanz 34, über die die Strahlumlenkeinrichtung 18 zwischen der ersten Stellung und der zweiten Stellung bewegt wird, kann zumindest einem Abstand zwischen vier optischen Kanälen der Abbildungsvorrichtung entsprechen. Die Strahlumlenkeinrichtung 18 kann eine blockweise Sortierung der Strahlumlenkelemente 32a-h aufweisen. Bspw. können die Strahlumlenkelemente 32a-d ausgebildet sein, um die Strahlengänge der Abbildungsvorrichtung in eine erste Blickrichtung hin zu einem ersten Gesichtsfeld umzulenken, wobei jeder optische Kanal einem Teilgesichtsfeld des Gesamtgesichtsfelds zugeordnet sein kann. Die Strahlumlenkelemente 32e-h können ausgebildet sein, um die Strahlengänge der Abbildungsvorrichtung in eine zweite Blickrichtung hin zu einem zweiten Gesichtsfeld umzulenken, wobei jeder optische Kanal einem Teilgesichtsfeld des Gesamtgesichtsfelds zugeordnet sein kann. Gemäß weiteren Ausführungsbeispielen ist es möglich, dass Strahlengänge von zumindest zwei optischen Kanälen von einem Strahlumlenkelement umgelenkt werden, so dass eine Anzahl von Strahlumlenkelementen der Strahlumlenkeinrichtung 18 geringer sein kann.

Bei den Strahlumlenkelementen 32a-h kann es sich bspw. um von einander verschieden gekrümmte Bereiche der Strahlumlenkeinrichtung 18 oder um plane Facetten eines Facettenspiegels handeln. Beispielsweise kann die Strahlumlenkeinrichtung 18 als ein Array von Facetten und/oder zueinander unterschiedlich geneigten Umlenkbereichen 32a-h verstanden werden, so dass auf die Strahlumlenkeinrichtung 18 treffende Strahlengänge von optischen Kanälen in voneinander verschiedene Teilgesichtsfelder des Gesichtsfeldes des ersten Betriebszustandes und auf Umlenkbereiche 32e-h treffende und von diesen umgelenkte Strahlengänge in voneinander verschiedene Teilgesichtsfelder eines Gesichtsfeldes des zweiten Betriebszustandes gelenkt werden.

Fig. 4b zeigt eine schematische Ansicht der Strahlumlenkeinrichtung 18 gemäß einer Konfiguration, die zu der Konfiguration gemäß der Fig. 4a verschieden ist. Während die Konfiguration gemäß Fig. 4a als blockweise Sortierung der Strahlumlenkbereiche 32a-h basierend auf einem Betriebszustand verstanden werden kann, kann die Konfiguration gemäß Fig. 4b als kanalweise Sortierung der Strahlumlenkbereiche 32a-h basierend auf einer Reihenfolge der optischen Kanäle der Abbildungsvorrichtung verstanden werden. Die dem ersten optischen Kanal zugeordneten Strahlumlenkbereiche 32a und 32e können benachbart zueinander angeordnet sein. Analog können die Strahlumlenkbereiche 32b und 32f, 32c und 32g bzw. 32d und 32h, die den optischen Kanälen 2, 3 bzw. 4 zugeordnet sein können, benachbart zueinander angeordnet sein. Weisen die optischen Kanäle der Abbildungsvorrichtung beispielsweise einen hinreichen großen Abstand zueinander auf, kann eine Distanz 34', über die die Strahlumlenkeinrichtung 18 hinweg bewegt wird, um zwischen der ersten Stellung und der zweiten Stellung hin und her bewegt zu werden, geringer sein als die Distanz 34, beispielsweise ein Viertel oder eine Hälfte hiervon. Dies ermöglicht eine zusätzlich reduzierte Bauform der Abbildungsvorrichtung und/oder der tragbaren Vorrichtung.

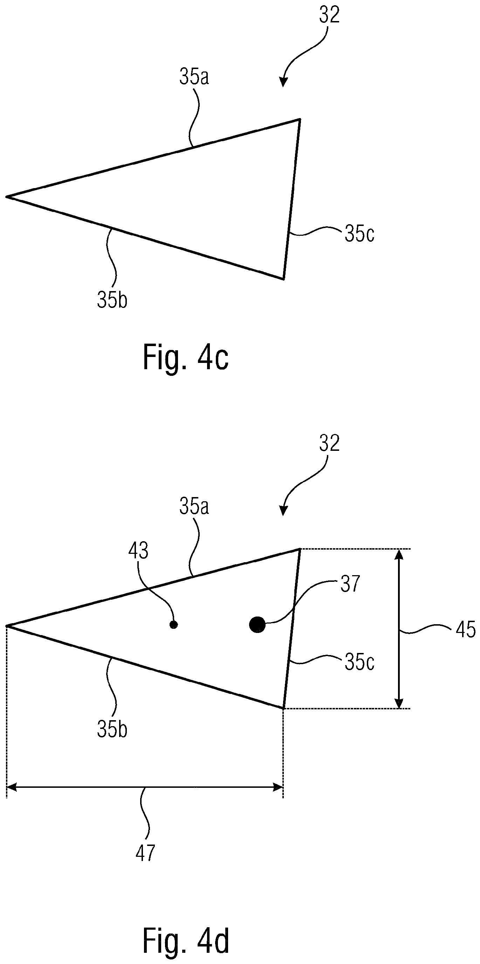

Anhand der Fig. 4c-g wird eine vorteilhafte Ausgestaltungen der Strahlumlenkeinrichtung 18 beschrieben. Die Ausführungen zeigen eine Reihe von Vorteilen auf, die einzeln oder in beliebiger Kombination mit einander ausführbar sind, jedoch nicht einschränkend wirken sollen.

Fig. 4c zeigt eine schematische Seitenschnittansicht eines Strahlumlenkelements 32, wie es für eine hierin beschriebene Strahlumlenkeinrichtung, etwa die Strahlumlenkeinrichtung 18 der Fig. 4a oder 4b, einsetzbar ist. Das Strahlumlenkelement 32 kann einen polygonzugartigen Querschnitt aufweisen. Obwohl ein dreieckiger Querschnitt gezeigt ist, kann es sich auch um ein beliebiges anderes Polygon handeln. Alternativ oder zusätzlich kann der Querschnitt auch zumindest eine gekrümmte Oberfläche aufweisen, wobei insbesondere bei reflektierenden Oberflächen eine zumindest abschnittsweise ebene Ausbildung vorteilhaft sein kann, um Abbildungsfehler zu vermeiden.

Das Strahlumlenkelement 32 weist bspw. eine erste Seite 35a, eine zweite Seite 35b und eine dritte Seite 35c auf. Zumindest zwei Seiten, etwa die Seiten 35a und 35b sind reflektiv ausgebildet, so dass das Strahlumlenkelement 32 beidseitig reflektiv ausgebildet ist. Bei den Seiten 35a und 35b kann es sich um Hauptseiten des Strahlumlenkelements 32 handeln, also Seiten, deren Fläche größer ist, als die Seite 35c.

In anderen Worten kann das Strahlumlenkelement 32 keilförmig und beidseitig reflektiv gebildet sein. Der Fläche 35c gegenüberliegend, also zwischen den Flächen 35a und 35b, kann eine weitere Fläche angeordnet sein, die jedoch wesentlich kleiner als die Fläche 35c ist. Mit anderen Worten verläuft in einem solchen Fall der durch die Flächen 35a, 35b und 35c gebildete Keil nicht beliebig spitz zu, sondern ist an der spitzen Seite mit einer Fläche versehen und mithin abgestumpft.

Fig. 4d zeigt eine schematische Seitenschnittansicht des Strahlumlenkelements 32, bei dem eine Aufhängung oder eine Verschiebeachse 37 des Strahlumlenkelements 32 beschrieben ist. Die Verschiebeachse 37, um die das Strahlumlenkelement 32 rotatorisch und/oder translatorisch in der Strahlumlenkeinrichtung 18 bewegbar sein kann, kann exzentrisch bezüglich eines Flächenschwerpunktes 43 des Querschnitts verschoben sein. Der Flächenschwerpunkt kann alternativ auch ein Punkt sein, der die hälftige Abmessung des Strahlumlenkelements 32 entlang einer Dickenrichtung 45 und entlang einer Richtung 47 senkrecht hierzu beschreibt.

Die Verschiebeachse kann bspw. entlang einer Dickenrichtung 45 unverändert und einen beliebigen Versatz in einer Richtung senkrecht hierzu aufweisen. Alternativ ist auch ein Versatz entlang der Dickenrichtung 45 vorstellbar. Die Verschiebung kann bspw. so erfolgen, dass bei einer Rotation des Strahlumlenkelements 32 um die Verschiebeachse 37 ein höherer Stellweg erhalten wird, als bei einer Rotation um den Flächenschwerpunkt 43. So kann sich durch die Verschiebung der Verschiebeachse 37 der Weg, um den die Kante zwischen den Seiten 35a und 35b bei einer Rotation bewegt wird bei gleichem Rotationswinkel verglichen mit einer Rotation um den Flächenschwerpunkt 43 erhöhen. Bevorzugt ist das Strahlumlenkelement 32 so angeordnet, dass die Kante, also die spitze Seite des keilförmigen Querschnitts, zwischen den Seiten 35a und 35b dem Bildsensor zugewandt ist. Durch geringe Rotationsbewegungen kann somit eine jeweils andere Seite 35a oder 35b den Strahlengang der optischen Kanäle umlenken. Hierbei wird deutlich, dass die Rotation so ausgeführt werden kann, dass ein Raumbedarf der Strahlumlenkeinrichtung entlang der Dickenrichtung 45 gering ist, da eine Bewegung des Strahlumlenkelements 32 so, dass eine Hauptseite senkrecht zum Bildsensor steht, nicht erforderlich ist.

Die Seite 35c kann auch als Nebenseite oder als Rückseite bezeichnet werden. Mehrere Strahlumlenkelemente können so miteinander verbunden werden, dass ein verbindendes Element an der Seite 35c angeordnet ist, oder durch den Querschnitt der Strahlumlenkelemente verläuft, also im Inneren der Strahlumlenkelemente angeordnet ist, etwa im Bereich der Verschiebeachse 37. Insbesondere kann das haltende Element so angeordnet sein, dass es nicht oder lediglich in geringem Umfang, d. h., höchstens 50 %, höchstens 30 % oder höchstens 10 % über das Strahlumlenkelement 32 entlang der Richtung 45 hinausragt, so dass das Halteelement nicht die Ausdehnung des Gesamtaufbaus entlang der Richtung 45 erhöht oder bestimmt. Die Ausdehnung in Dickenrichtung 45 kann alternativ durch die Linsen der optischen Kanäle bestimmt sein, d. h. diese weisen die das Minimum der Dicke definierende Abmessung auf.

Das Strahlumlenkelement 32 kann aus Glas, Keramik, Glaskeramik, Kunststoff, Metall oder einer Kombination dieser Materialien und /oder weiterer Materialien gebildet sein.

In anderen Worten kann das Strahlumlenkelement 32 so angeordnet sein, dass die Spitze, d. h., die Kante zwischen den Hauptseiten 35a und 35b zum Bildsensor zeigt. Eine Haltung der Strahlumlenkelemente kann so erfolgen, dass sie lediglich an der Rückseite oder im Inneren der Strahlumlenkelemente erfolgt, d. h. die Hauptseiten werden nicht verdeckt. Ein gemeinsames haltendes oder verbindendes Element kann sich über die Rückseite 35c erstrecken. Die Drehachse des Strahlumlenkelements 32 kann exzentrisch angeordnet sein.

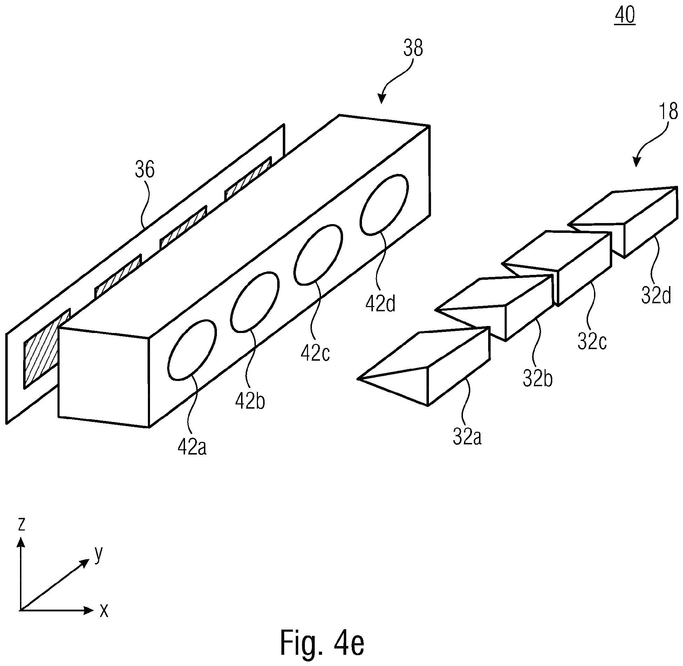

Fig. 4e zeigt eine schematische perspektivische Ansicht einer Multiaperturabbildungsvorrichtung 40, die einen Bildsensor 36, und ein einzeiliges Array 38 von nebeneinander angeordneten optischen Kanälen 42a-d umfasst. Die Strahlumlenkeinrichtung 18 umfasst eine Anzahl von Strahlumlenkelementen 32a-d, die der Anzahl von optischen Kanälen entsprechen kann. Alternativ kann eine geringere Anzahl von Strahlumlenkelementen angeordnet sein, etwa wenn zumindest ein Strahlumlenkelement von zwei optischen Kanälen genutzt wird. Alternativ kann auch eine höhere Anzahl angeordnet sein, etwa wenn eine Umschaltung der Umlenkrichtung der Strahlumlenkeinrichtung 18 durch eine translatorische Bewegung erfolgt, wie es mi Zusammenhang mit den Fig. 4a und 4b beschreiben ist. Jedes Strahlumlenkelement 32a-d kann einem optischen Kanal 42a-d zugeordnet sein. Die Strahlumlenkelemente 32a-d können als eine Vielzahl von Elementen 32 gemäß den Fig. 4c und Fig. 4d gebildet sein. Alternativ können zumindest zwei, mehrere oder alle Strahlumlenkelemente 32a-d einstückig mit einander gebildet sein.

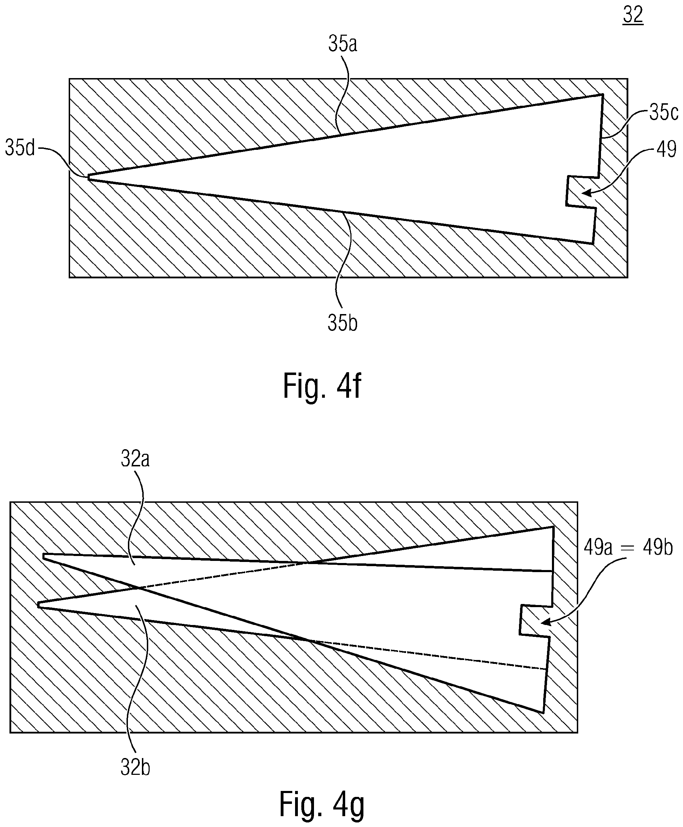

Fig. 4f zeigt eine schematische Seitenschnittansicht des Strahlumlenkelements 32, dessen Querschnitt als Freiformfläche gebildet ist. So kann die Seite 35c eine Aussparung 49 aufweisen, die eine Befestigung eines haltenden Elements ermöglicht, wobei die Aussparung 49 auch als hervorstehendes Element, etwa als Feder eines Nut-Feder-Systems gebildet sein kann. Der Querschnitt weist ferner eine vierte Seite 35d auf, die eine geringere Flächenausdehnung als die Hauptseiten 35a und 35b aufweist und selbige mit einander verbindet.

Fig. 4g zeigt eine schematische Seitenschnittansicht eines ersten Strahlumlenkelements 32a und eines in Darstellungsrichtung dahinterliegenden zweiten Strahlumlenkelements 32b. Die Aussparungen 49a und 49b können dabei so angeordnet sein, dass sie im Wesentlichen deckungsgleich sind, so dass eine Anordnung eines verbindenden Elements in den Aussparungen ermöglicht ist.

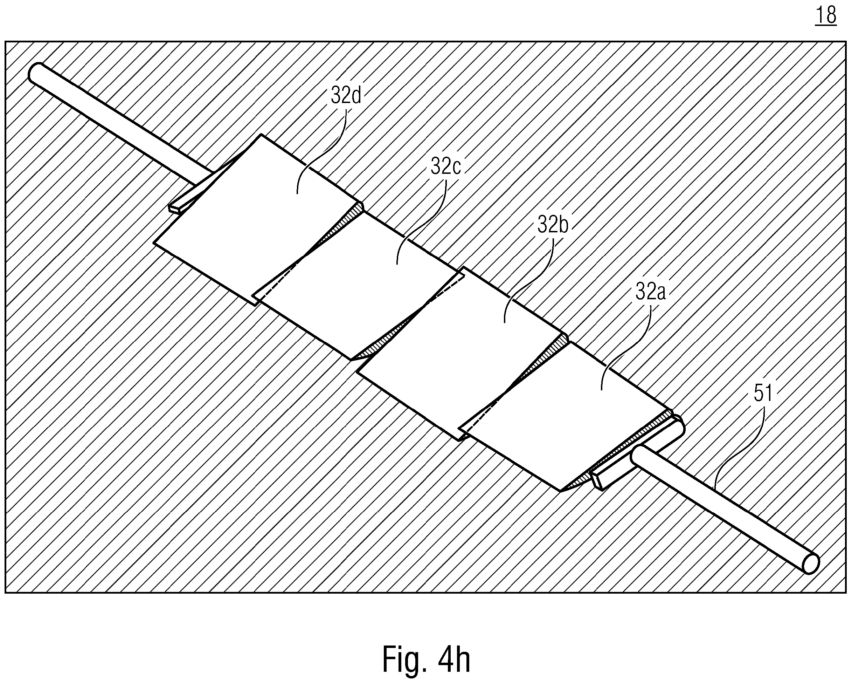

Fig. 4h zeigt eine schematische perspektivische Ansicht der Strahlumlenkeinrichtung 18, die bspw. vier Strahlumlenkelements 32a-d umfasst, die mit einem verbindenden Element 51 verbunden sind. Das verbindende Element kann nutzbar sein, um von einem Aktor translatorisch und/oder rotatorisch bewegbar zu sein. Das verbindende Element 51 kann einstückig ausgebildet sein und über eine Erstreckungsrichtung, etwa die y-Richtung in Fig. 4e, an oder in den Strahlumlenkelementen 32a-d verlaufen. Alternativ kann das verbindende Element 51 auch lediglich mit zumindest einer Seite der Strahlumlenkeinrichtung 18 verbunden sein, etwa wenn die Strahlumlenkelemente 32a-d einstückig gebildet sind. Alternativ kann eine Verbindung mit einem Aktor und/oder eine Verbindung der Strahlumlenkelemente 32a-d auch auf beliebige andere Weise erfolgen, etwa mittels Kleben, Ansprengen oder Löten.

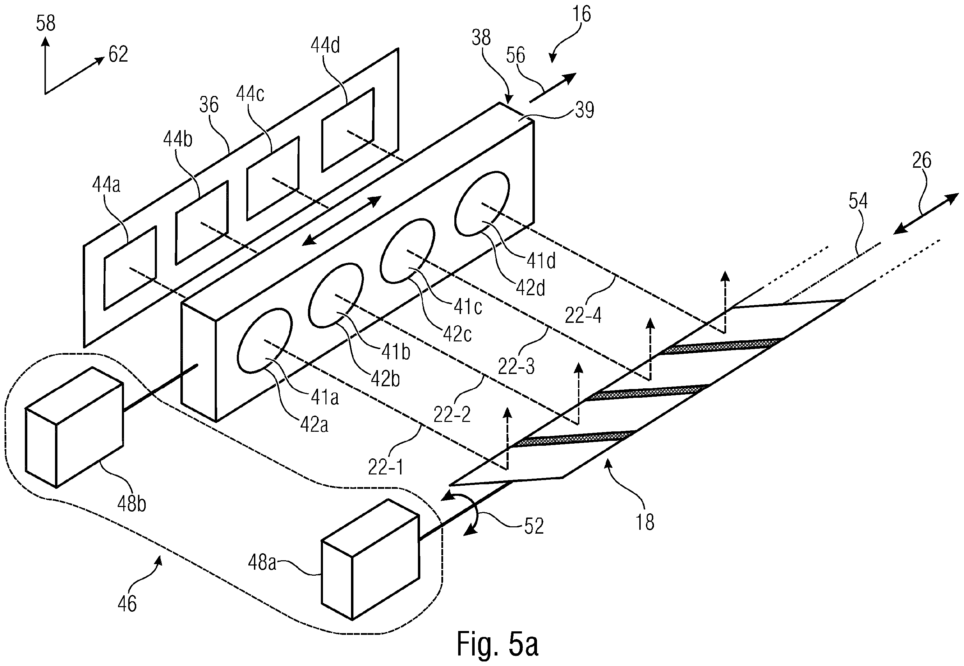

Fig. 5a zeigt eine schematische perspektivische Ansicht der Abbildungsvorrichtung 16. Die Abbildungsvorrichtung 16 umfasst die Strahlumlenkeinrichtung 18, einen Bildsensor 36 und ein einzeiliges Array 38 von nebeneinander angeordneten optischen Kanälen 42a-d. Jeder optische Kanal 42a-d kann eine Optik aufweisen, die ausgebildet ist, um Strahlengänge 22-1 bis 22-4 der Abbildungsvorrichtung 16 optisch zu beeinflussen. Der Bildsensor 36 kann Bildsensorbereiche 44a-d umfassen, wobei die Strahlengänge 22-1 bis 22-4 der optischen Kanäle 22a-d jeweils auf einen Bildsensorbereich 44a-d treffen können. Vereinfacht ausgedrückt kann jedem Bildsensorbereich 44a-d ein optischer Kanal 22a-d und/oder ein Strahlengang 22-1 bis 22-4 zugeordnet sein. Die Strahlumlenkeinrichtung 18 kann ausgebildet sein, um basierend auf voneinander verschiedenen Betriebszuständen der tragbaren Vorrichtung die Strahlengänge 22-1 bis 22-4 in voneinander verschiedene Richtungen umzulenken, wie es beispielsweise im Zusammenhang mit den Fig. 1, 2, 3a, 3b, 4a-hbeschrieben ist. Das bedeutet, dass die Abbildungsvorrichtung 16 als Multiaperturabbildungsvorrichtung 40 gebildet sein kann oder diese umfassen kann.

Die Bildsensorbereiche 44a-d können beispielsweise jeweils aus einem Chip gebildet sein, der ein entsprechendes Pixelarray umfasst, wobei die Bildsensorbereiche auf einem gemeinsamen Substrat bzw. einer gemeinsamen Platine montiert sein können. Alternativ wäre es natürlich auch möglich, dass die Bildsensorbereiche 44a-d jeweils aus einem Teil eines gemeinsamen Pixelarrays, das sich kontinuierlich über die Bildsensorbereiche 44a-d erstreckt, gebildet sind, wobei das gemeinsame Pixelarray beispielsweise auf einem einzelnen Chip gebildet ist. Beispielsweise werden dann lediglich die Pixelwerte des gemeinsamen Pixelarrays in den Bildsensorbereichen 44a-d ausgelesen. Verschiedene Mischungen dieser Alternativen sind natürlich ebenfalls möglich, wie z.B. das Vorhandensein eines Chips für zwei oder mehr Kanäle und eines weiteren Chips für wiederum andere Kanäle oder dergleichen. In dem Fall mehrerer Chips des Bildsensors 36 können diese beispielsweise auf einer oder mehreren Platinen montiert sein, wie z.B. alle gemeinsam oder gruppenweise oder dergleichen.

Das einzeilige Array 38 kann einen Träger 39 aufweisen, an dem Optiken 41a-d der optischen Kanäle angeordnet sind. Der Träger 39 kann von den für die Abbildung in den einzelnen optischen Kanälen genutzten optischen Strahlengängen 22-1 bis 22-4 passiert werden. Die optischen Kanäle der Multiaperturabbildungsvorrichtung können den Träger 39 zwischen der Strahlumlenkeinrichtung 18 und einem Bildsensor 36 durchqueren. Der Träger 39 kann eine Relativposition zwischen den Optiken 41a-d stabil halten. Der Träger 39 kann transparent gebildet sein und bspw. ein Glasmaterial und/oder ein Polymermaterial umfassen. Die Optiken 41a-d können an zumindest einer Oberfläche des Trägers 39 angeordnet sein. Dies ermöglicht eine geringe Abmessung des Trägers 39 und mithin des einzeiligen Arrays 38 entlang einer Richtung parallel zu dem Bildsensor 36 und senkrecht zu der Zeilenerstreckungsrichtung 56, da auf eine Einfassung der Optiken 41a-d in einem Umfangsbereich derselben verzichtet werden kann. Gemäß Ausführungsbeispielen ist der Träger 39 entlang der Richtung parallel zu einer Hauptseite des Bildsensors 36 und senkrecht zu der Zeilenstreckungsrichtung 56 nicht oder lediglich unwesentlich, d. h., höchstens 20 %, höchstens 10 % oder höchstens 5 % , größer ausgebildet, als eine entsprechende Abmessung der Optik 41a-d.

Die Strahlumlenkeinrichtung kann so ausgebildet sein, dass sie in der ersten Stellung und in der zweiten Stellung den Strahlengang 22-1 bis 22-4 jedes optischen Kanals 42a-d in eine voneinander verschiedene Richtung umlenkt. Das bedeutet, dass die umgelenkten Strahlengänge 22-1 bis 22-4 einen Winkel zueinander aufweisen können, wie es im Zusammenhang mit Fig. 6 beschrieben wird. Die optischen Kanäle 16a-d können in zumindest einer Zeile entlang einer Zeilenerstreckungsrichtung 56 angeordnet sein. Das Array 38 kann als mehrzeiliges Array umfassend zumindest zwei Zeilen oder als einzeiliges Array umfassend (genau) eine Zeile von optischen Kanälen gebildet sein. Die optischen Kanäle können von der Strahlumlenkeinrichtung 18 basierend auf einer eingestellten Blickrichtung hin zu veränderlichen Gesichtsfeldern gelenkt werden. Die optischen Kanäle können innerhalb einer Blickrichtung einen Winkel zueinander aufweisen, so dass die optischen Kanäle in höchsten teilweise überlappende Teilgesichtsfelder des Gesamtgesichtsfeldes gelenkt werden. Die unterschiedlichen Winkel der optischen Kanäle können basierend auf den Optiken der optischen Kanäle und/oder basierend auf einer von einander verschiedenen Umlenkung der optischen Kanäle an der Strahlumlenkeinrichtung 18 erhalten werden.

Die Abbildungsvorrichtung 16 kann einen optischen Bildstabilisator 46 umfassen, der ausgebildet ist, um eine optische Bildstabilisierung eines von dem Bildsensor 36 erfassten Bildes zu ermöglichen. Hierfür kann der optische Bildstabilisator 46 einen Aktor 48a umfassen, der ausgebildet ist, um eine Rotationsbewegung 52 der Strahlumlenkeinrichtung 18 zu erzeugen. Die Rotationsbewegung 52 kann um eine Rotationsachse 54 erfolgen, wobei die Rotationsachse 54 der Strahlumlenkeinrichtung 18 in einem Mittenbereich der Strahlumlenkeinrichtung 18 oder abseits hiervon angeordnet sein kann. Die Rotationsbewegung 52 kann der Rotationsbewegung 28 bzw. der translatorischen Bewegung 26 zum Umschalten der Strahlumlenkeinrichtung zwischen einer ersten und einer zweiten Stellung oder Betriebszustand überlagerbar sein. Ist die Strahlumlenkeinrichtung 18 translatorisch bewegbar, so kann die translatorische Bewegung 26 parallel zu einer Zeilenerstreckungsrichtung 56 des einzeiligen Arrays 38 im Raum angeordnet sein. Die Zeilenerstreckungsrichtung 56 kann sich auf eine Richtung beziehen, entlang der die optischen Kanäle 42a-d nebeneinander angeordnet sind. Basierend auf der Rotationsbewegung 52 kann eine optische Bildstabilisierung entlang einer ersten Bildachse 58, ggf. senkrecht zu der Zeilenerstreckungsrichtung 56 erhalten werden.

Der optische Bildstabilisator 46 kann alternativ oder zusätzlich einen Aktor 48b umfassen, der ausgebildet ist, um das einzeilige Array 38 entlang der Zeilenerstreckungsrichtung 56 translatorisch zu bewegen. Basierend auf der translatorischen Bewegung des einzeiligen Arrays 38 entlang der Zeilenerstreckungsrichtung 56 kann eine optische Bildstabilisierung entlang einer zweiten Bildachse 62 ggf. parallel zu der Zeilenerstreckungsrichtung 56 bzw. parallel zu der Bewegungsrichtung des einzeiligen Arrays 38 erhalten werden. Die Aktoren 48a und 48b können beispielsweise als piezoelektrischer Aktor, pneumatischer Aktor, hydraulischer Aktor, Gleichstrommotor, Schrittmotor, thermischer Aktor, elektrostatischer Aktor, elektrostriktiver Aktor und/oder magnetostriktiver Aktor gebildet sein. Die Aktoren 48a und 48b können gleich oder voneinander verschieden gebildet sein. Alternativ kann auch ein Aktor angeordnet sein, der ausgebildet ist, um die Strahlumlenkeinrichtung 18 rotatorisch und das einzeilige Array 38 translatorisch zu bewegen. Beispielsweise kann die Rotationachse 54 parallel zu der Zeilenerstreckungsrichtung 56 sein. Die Rotationsbewegung 52 um die Rotationsachse 54 kann zu einem geringen Bauraumbedarf der Abbildungsvorrichtung 16 entlang einer Richtung parallel zu der Bildachse 58 führen, so dass die tragbare Vorrichtung, die im Inneren eines Gehäuses die Abbildungsvorrichtung 16 umfasst, ebenfalls eine geringe Abmessung aufweisen kann. Vereinfacht ausgedrückt, kann die tragbare Vorrichtung ein flaches Gehäuses aufweisen.

Die translatorische Bewegung 26 kann beispielsweise parallel oder im Wesentlichen parallel zu einer Erstreckung einer Hauptseite 13a und/oder 13b der Vorrichtung 10 ausführbar sein, so dass auf einen zusätzlichen Bauraum, der für ein Umschalten der Strahlumlenkeinrichtung zwischen Betriebszuständen erforderlich sein kann entlang der Zeilenerstreckungsrichtung 56 angeordnet werden kann und/oder auf eine Bereitstellung von Bauraum entlang einer Dickenrichtung der Vorrichtung verzichtet werden kann. Die Aktoren 48a und/oder 48b können entlang der Zeilenerstreckungsrichtung und/oder senkrecht hierzu parallel zu einer Erstreckungsrichtung von Hauptseiten des Gehäuses der Vorrichtung angeordnet sein. Vereinfacht kann dies so beschrieben werden, dass Aktoren zum Umschalten zwischen Betriebszuständen und/oder Aktoren des optischen Bildstabilisators neben, vor und hinter einer Erstreckung zwischen dem Bildsensor, dem einzeiligen Array 38 und der Strahlumlenkeinrichtung 18 angeordnet sein können, wobei auf eine Anordnung darüber und/oder darunter verzichtet wird, um eine Bauhöhe der Abbildungsvorrichtung 16 gering zu halten. Das bedeutet, das Aktoren zum Umschalten des Betriebszustandes und/oder des optischen Bildstabilisators in einer Ebene angeordnet sein können, in der der Bildsensor 36, das einzeilige Array 38 und die Strahlumlenkeinrichtung 18 angeordnet sind.

Gemäß weiteren Ausführungsbeispielen kann der Aktor 48b und/oder andere Aktoren ausgebildet sein, um einen Abstand zwischen dem Bildsensor 36 und dem einzeiligen Array 38 bzw. der Optiken der optischen Kanäle zu verändern. Hierfür kann bspw. der Aktor 48b ausgebildet sein, um das einzeilige Array 38 und/oder den Bildsensor 36 relativ zueinander entlang eines Strahlengangs der Strahlengänge 22-1 bis 22-4 bzw. senkrecht zur Zeilenerstreckungsrichtung 56 zu bewegen, um einen Fokus der Abbildung des Gesichtsfeldes zu verändern und/oder um eine Autofokusfunktion zu erhalten. Die Abbildungsvorrichtung 16 kann eine Fokuseinrichtung aufweisen, die ausgebildet ist, um den Fokus der Abbildungsvorrichtung zu verändern. Die Fokuseinrichtung kann ausgebildet sein, um eine Relativbewegung zwischen dem einzeiligen Array 38 und dem Bildsensor 36 bereitzustellen. Die Fokuseinrichtung kann ausgebildet sein, um die Relativbewegung unter Ausführung einer zu der Relativbewegung simultanen Bewegung der Strahlumlenkeinrichtung 18 auszuführen. Bspw. kann der Aktor 48b oder ein weiterer Aktor ausgebildet sein, um einen Abstand zwischen dem einzeiligen Array 38 und der Strahlumlenkeinrichtung 18 zumindest im Wesentlichen konstant oder auch bei Nutzung keines zusätzlichen Aktors zumindest im Wesentlichen, ggf. exakt konstant zu halten, d. h., die Strahlumlenkeinrichtung 18 in einem Umfang zu bewegen, wie das einzeilige Array 38. Bei Kameras, die keine Strahlumlenkeinrichtung aufweisen, kann eine Implementierung einer Fokusfunktion zu einer erhöhten Abmessung (Dicke) der Vorrichtung führen. Basierend auf der Strahlumlenkeinrichtung kann dies ohne eine zusätzliche Abmessung entlang einer Abmessung parallel zu einer Hauptseite des Bildsensors 36 und senkrecht zu der Zeilenerstreckungsrichtung 56 (bspw. eine Dicke) der Multiaperturabbildungsvorrichtung erfolgen, da ein die Bewegung ermöglichender Bauraum senkrecht hierzu angeordnet werden kann. Basierend auf einem konstanten Abstand zwischen einzeiligem Array 38 und der Strahlumlenkeinrichtung 18 kann eine Strahlumlenkung in einem eingestellten (ggf. optimalen) Zustand beibehalten werden. Vereinfacht ausgedrückt, kann die Abbildungsvorrichtung 16 eine Fokuseinrichtung zum Verändern eines Fokus aufweisen. Die Fokuseinrichtung kann ausgebildet sein, um eine Relativbewegung (Fokussierungsbewegung) zwischen zumindest einer Optik 41a-d der optischen Kanäle der Multiaperturabbildungsvorrichtung 16 und dem Bildsensor 36 bereitzustellen. Die Fokuseinrichtung kann einen Aktor zum Bereitstellen der Relativbewegung aufweisen, etwa den Aktor 48b und/oder 48a. Die Strahlumlenkeinrichtung 18 kann dabei durch entsprechende konstruktive Auslegung oder Nutzung ggf. unter Nutzung eines weiteren Aktors simultan zur Fokussierungsbewegung mitbewegt werden. Das bedeutet, dass ein Abstand zwischen dem einzeiligen Array 38 und der Strahlumlenkeinrichtung unverändert bleibt und/oder dass die Strahlumlenkeinrichtung 18 gleichzeitig oder zeitversetzt in einem gleichen oder vergleichbaren Umfang wie die Fokussierungsbewegung bewegt wird, so dass zumindest zu einem Zeitpunkt einer Aufnahme des Gesichtsfeldes durch die Multiaperturabbildungsvorrichtung unverändert verglichen mit einem Abstand vor einer Veränderung des Fokus ist.

Wie es im Zusammenhang mit Fig. 1 beschrieben ist, können die umgelenkten Strahlengänge der optischen Kanäle durch einen transparenten Bereich eines Gehäuses der Vorrichtung verlaufen, wobei in dem transparenten Bereich eine Blende angeordnet sein kann. In zumindest einem Betriebszustand der Vorrichtung kann eine in einem Bereich des transparenten Bereichs angeordnete Blende diesen optisch zumindest teilweise so verschließen, dass die Blende für zwei, eine Vielzahl oder alle optische Kanäle wirksam ist, d. h., den zumindest teilweise geschlossenen Zustand aufweist. In einem anderen Betriebszustand kann die Blende für die zwei, die Vielzahl oder für alle optischen Kanäle einen geöffneten Zustand aufweisen. Das bedeutet, die Blenden können für zumindest zwei optische Kanäle der Multiaperturabbildungsvorrichtung wirksam sein. In dem ersten Betriebszustand kann die Blende 24b den transparenten Bereich 14b optisch zumindest teilweise für die zwei, die Vielzahl oder alle optischen Kanäle verschließen. In dem zweiten Betriebszustand kann die Blende 24a den transparenten Bereich 14a optisch zumindest teilweise für die zwei, die Vielzahl oder alle optischen Kanäle verschließen.

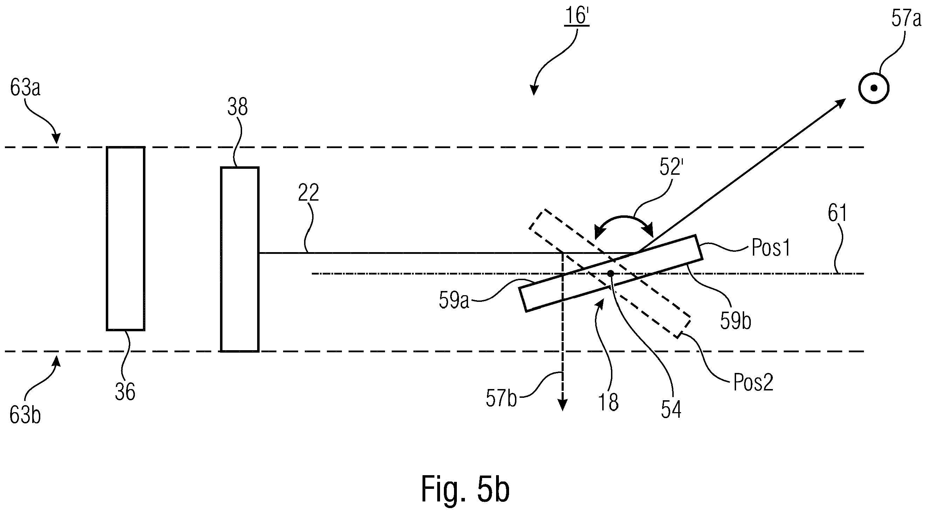

Fig. 5b zeigt eine schematische Seitenschnittansicht einer modifizierten Abbildungsvorrichtung 16', bei der die Strahlumlenkeinrichtung 18 zwischen einer ersten Position Pos1 des ersten Betriebszustands und einer zweiten Position Pos2 des zweiten Betriebszustands basierend auf einer rotatorischen Bewegung 52' um die Rotationsachse 54 bewegbar ist. In dem ersten Betriebszustand kann die Abbildungsvorrichtung 16' eine erste Blickrichtung 57a aufweisen. In dem zweiten Betriebszustand kann die Abbildungsvorrichtung 16' eine erste Blickrichtung 57b aufweisen. Hauptseiten 59a und 59b der Strahlumlenkeinrichtung 18 können reflektiv als Spiegel und/oder als Facettenelemente gebildet sein. Während eines Umschaltens zwischen den Betriebszuständen kann die Strahlumlenkeinrichtung 18 zwischen einer Mittenposition 61 umschaltbar sein, so dass ein Abstand zwischen parallelen Ebenen 63a und 63b, der eine minimale Abmessung der Abbildungsvorrichtung 16' entlang einer Normalenrichtung der Ebenen 63a und 63b beschreiben können durch den Abmessungen des Bildsensors 36, des Arrays 38 nicht jedoch von einer Bewegung der Strahlumlenkeinrichtung 18 beeinflusst ist. Die Rotationsbewegung 52 kann mit der Rotationsbewegung 28 überlagerbar sein. Vereinfacht ausgedrückt kann eine Überlagerung von Umschalten und optischer Bildstabilisierung implementiert sein.

Aktoren der Multiaperturabbildungsvorrichtung können so angeordnet sein, dass sie zumindest teilweise zwischen zwei Ebenen 63a und 63b angeordnet ist, die durch Seiten eines Quaders aufgespannt werden. Die Seiten des Quaders können parallel zueinander sowie parallel zu der Zeilenerstreckungsrichtung des Arrays und eines Teils des Strahlengangs der optischen Kanäle zwischen dem Bildsensor und der Strahlumlenkeinrichtung parallel ausgerichtet sein. Das Volumen des Quaders ist minimal und umfasst dennoch den Bildsensor, das Array und die Strahlumlenkeinrichtung sowie deren betriebsbedingte Bewegungen.

Eine Dickenrichtung der Multiaperturabbildungsvorrichtung kann normal zu den Ebenen 63a und/oder 63b angeordnet sein. Die Aktoren können eine Abmessung oder Ausdehnung parallel zu der Dickenrichtung aufweisen. Ein Anteil von höchstens 50 %, höchstens 30 % oder höchstens 10 % der Abmessung kann ausgehend von einem Bereich zwischen den Ebenen 63a und 63b über die Ebene 63a und/oder 63b hinausragen oder aus dem Bereich herausragen Die Aktoren ragen somit bspw. höchstens unwesentlich über die Ebene 63a und/oder 63b hinaus. Gemäß Ausführungsbeispielen ragen die Aktoren nicht über die Ebenen 63a und/oder 63b hinaus. Vorteilhaft daran ist, dass eine Ausdehnung der Multiaperturabbildungsvorrichtung entlang der Dickenrichtung durch die Aktoren nicht vergrößert wird.

Ein Volumen der Multiaperturabbildungsvorrichtung kann einen geringen oder minimalen Bauraum zwischen den Ebenen 63a und 63b aufweisen. Entlang der lateralen Seiten oder Erstreckungsrichtungen der Ebenen 63a und/oder 63b kann ein Bauraum der Multiaperturabbildungsvorrichtung groß oder beliebig groß sein. Das Volumen des virtuellen Quaders ist bspw. von einer Anordnung des Bildsensors 36, des Arrays 38 und der Strahlumlenkeinrichtung beeinflusst, wobei die Anordnung dieser Komponenten gemäß der hierin beschriebenen Ausführungsbeispiele so erfolgen kann, dass der Bauraum dieser Komponenten entlang der Richtung senkrecht zu den Ebenen und mithin der Abstand der Ebenen 63a und 63b zueinander gering oder minimal wird. Gegenüber anderen Anordnungen der Komponenten kann das Volumen und/oder der Abstand anderer Seiten des virtuellen Quaders vergrößert sein.

Fig. 6 zeigt eine schematische Ansicht eines Gesamtgesichtsfeldes 60, das vier einander überlappende Teilgesichtsfelder 62a-d umfasst. Bezug nehmend auf Fig. 5 kann beispielsweise der Strahlengang 22-1 hin zu dem Teilgesichtsfeld 62a, der Strahlengang 22-2 hin zu dem Teilgesichtsfeld 62b, der Strahlengang 22-3 hin zu dem Teilgesichtsfeld 62c und/oder der Strahlengang 22-4 hin zu dem Teilgesichtsfeld 62d gelenkt werden. Obwohl eine Zuordnung zwischen Strahlengängen 22-1 bis 22-4 zu den Teilgesichtsfeldern 62a-d beliebig ist, wird deutlich, dass ausgehend von der Strahlumlenkeinrichtung 18 die Strahlengänge 22-1 bis 22-4 in voneinander verschiedene Richtungen gelenkt werden.

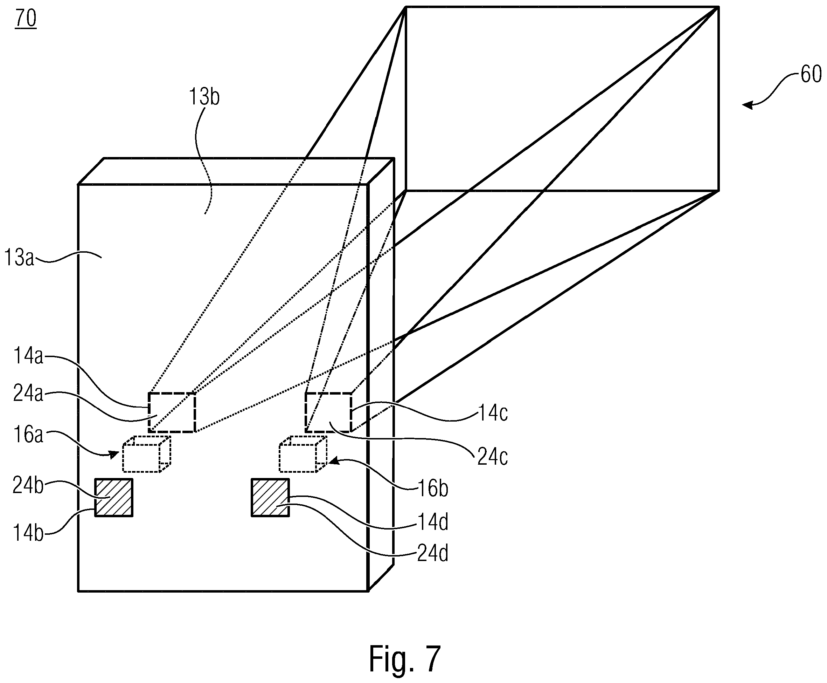

Fig. 7 zeigt eine schematische perspektivische Ansicht einer Vorrichtung 70, die einer erste Multiaperturabbildungsvorrichtung 16a und eine zweite Multiaperturabbildungsvorrichtung 16b umfasst, und ausgebildet ist um das Gesamtgesichtsfeld 60 stereoskopisch mit den Multiaperturabbildungsvorrichtungen zu erfassen. Das Gesamtgesichtsfeld 60 ist bspw. an einer der Hauptseite 13a abgewandten Hauptseite 13b angeordnet. Beispielsweise können die Multiaperturabbildungsvorrichtungen 16a und 16b das Gesamtgesichtsfeld 60 durch transparente Bereiche 14a bzw. 14c erfassen, wobei in der Hauptseite 13b angeordnete Blenden 24a und 24c zumindest teilweise transparent sind. In der Hauptseite 13a angeordnete Blenden 24b und 24d können transparenten Bereiche 14b bzw. 14d zumindest teilweise optisch verschließen, so dass ein Umfang von Falschlicht aus einer der Hauptseite 13a zugewandten Seite, das die Aufnahmen der Multiaperturabbildungsvorrichtungen 16a und/oder 16b verfälschen kann, zumindest reduziert ist. Obwohl die Multiaperturabbildungsvorrichtungen 16a und 16b räumlich von einander beabstandet angeordnet dargestellt sind, können die Multiaperturabbildungsvorrichtungen 16a und 16b auch räumlich benachbart oder kombiniert angeordnet sein. Bspw. können die einzeiligen Arrays der Abbildungsvorrichtungen 16a und 16b nebeneinander oder parallel zu einander angeordnet sein. Die einzeiligen Arrays können Zeilen zueinander bilden, wobei jede Multiaperturabbildungsvorrichtung 16a und 16b ein einzeiliges Array aufweist. Die Abbildungsvorrichtungen 16a und 16b können eine gemeinsame Strahlumlenkeinrichtung und/oder einen gemeinsamen Träger 39 und/oder ein gemeinsamen Bildsensor 36 aufweisen.

Die transparenten Bereiche 14a-d können zusätzlich mit einer schaltbaren Blende 24a-d ausgestattet sein, die den optischen Aufbau für den Fall der Nicht-Benutzung abdeckt. Die Blende 24a-d kann ein mechanisch bewegtes Teil umfassen. Die Bewegung des mechanisch bewegten Teils kann unter Nutzung eines Aktors erfolgen, wie es beispielsweise für die Aktoren 48a und 48b beschrieben ist. Die Blende kann alternativ oder zusätzlich elektrisch steuerbar sein und eine elektrochrome Schicht oder eine elektrochrome Schichtfolge umfassen.

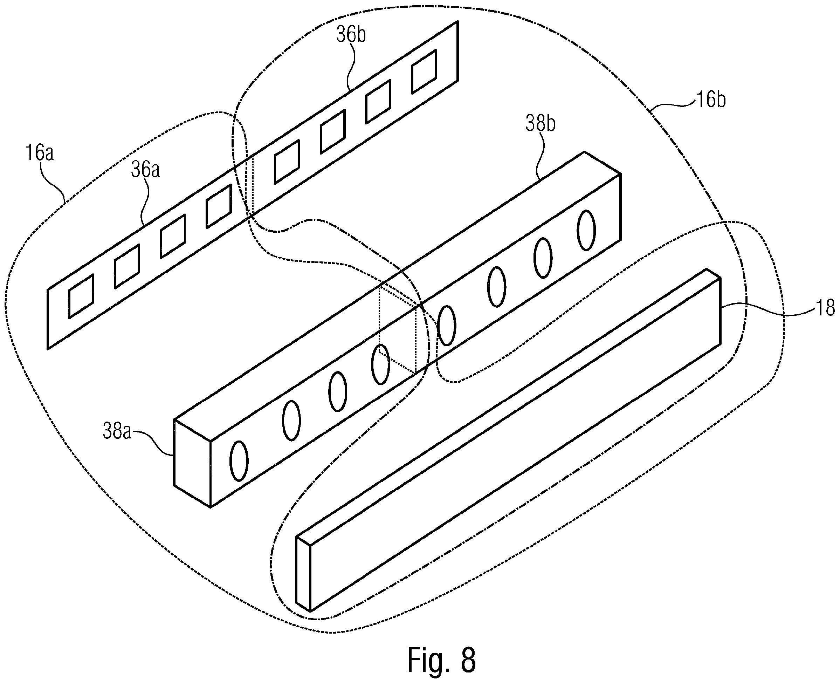

Fig. 8 zeigt einen schematischen Aufbau umfassend eine erste Multiaperturabbildungsvorrichtung 16a und eine zweite Multiaperturabbildungsvorrichtung 16b, wie er bspw. in dem Abbildungssystem 70 angeordnet sein kann. Die einzeiligen Arrays 38a und 38b bilden eine gemeinsame Zeile. Die Bildsensoren 36a und 36b können auf einem gemeinsamen Substrat bzw. auf einem gemeinsamen Schaltungsträger wie einer gemeinsamen Platine oder einem gemeinsamen Flexboard montiert sein. Alternativ können die Bildsensoren 36a und 36b auch von einander verschiedene Substrate umfassen. Verschiedene Mischungen dieser Alternativen sind natürlich ebenfalls möglich, wie etwa Multiaperturabbildungsvorrichtungen umfassend einen gemeinsamen Bildsensor, ein gemeinsames Array und/oder eine gemeinsame Strahlumlenkeinrichtung 18 sowie weitere Multiaperturabbildungsvorrichtungen, die separate Komponenten aufweisen. Vorteilhaft an einem gemeinsamen Bildsensor, einem gemeinsamen einzeiligen Array und/oder einer gemeinsamen Strahlumlenkeinrichtung ist, dass eine Bewegung einer jeweiligen Komponente mit einer großen Präzision durch ansteuern einer geringen Menge von Aktoren erhalten werden kann und eine Synchronisierung zwischen Aktoren reduziert oder vermieden werden kann. Ferner kann eine hohe thermische Stabilität erhalten werden. Alternativ oder zusätzlich können auch weitere Multiaperturabbildungsvorrichtungen ein gemeinsames Array, einen gemeinsamen Bildsensor und/oder eine gemeinsame Strahlumlenkeinrichtung aufweisen.

Es wurde bereits weiter oben darauf hingewiesen, dass die Strahlengänge bzw. optischen Achsen ausgehend von der Strahlumlenkeinrichtung in voneinander verschiedene Richtungen gelenkt werden können. Dies kann erhalten werden, indem die Strahlengänge während einer Umlenkung an der Strahlumlenkeinrichtung und/oder durch die Optiken abweichend von einer Parallelität zueinander gelenkt werden. Die Strahlengänge bzw. optischen Achsen können von einer Parallelität vor bzw. ohne Strahlumlenkung abweichend sein. Dieser Umstand wird im Folgenden damit umschrieben, dass die Kanäle mit einer Art Vorab-Divergenz versehen sein können. Mit dieser Vorab-Divergenz der optischen Achsen wäre es möglich, dass sich beispielsweise nicht alle Facettenneigungen von Facetten der Strahlumlenkeinrichtung untereinander unterscheiden, sondern dass manche Gruppen von Kanälen beispielsweise die Facetten mit gleicher Neigung besitzen oder auf diese gelenkt werden. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch einen lateralen Versatz zwischen optischen Zentren der Optiken der optischen Kanäle und Bildsensorbereichen der Kanäle erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz in der anderen Transversalebene, d.h. es sind alle parallel zur Zeilenerstreckungsrichtung und gegeneinander nur noch unterschiedlich zur vorerwähnten gemeinsamen Ebene der optischen Achsen geneigt, wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden. Vereinfachend können die Optiken eine (Vorab-)Divergenz der Strahlengänge entlang einer ersten (Bild-)Richtung und die Strahlumlenkeinrichtung eine Divergenz der Strahlengänge entlang einer zweiten (Bild-)Richtung ermöglichen.

Die erwähnte möglicherweise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angerordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angerordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz verwehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein reiner In-Ebene-Versatz in Zeilenerstreckungsrichtung ändert die Bauhöhe nicht, aber es resultieren ggf. weniger Facetten und/oder die Facetten weisen nur eine Kippung in einer Winkelorientierung auf, was den Aufbau vereinfacht. So können bspw. jeweils benachbarte optische Kanäle in der gemeinsamen Ebene verlaufende, jeweils gegeneinander schielende, also mit einer Vorab-Divergenz versehene, optische Achsen aufweisen. Eine Facette kann bezüglich einer Gruppe von optischen Kanälen angeordnet, lediglich in einer Richtung geneigt und parallel zur Zeilenerstreckungsrichtung sein.

Ferner könnte es vorgesehen sein, dass manche optische Kanäle dem gleichen Teilgesichtsfeld zugeordnet sind, wie z.B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafterweise lägen Pixelbilder des Bildsensors eines Kanals einer Gruppe in Zwischenpositionen zwischen Bildern der Pixel des Bildsensors eines anderen Kanals dieser Gruppe.

Denkbar wäre beispielsweise auch ohne Superresolutionszwecke, sondern lediglich zu Stereoskopiezwecken eine Ausführung, bei denen eine Gruppe von unmittelbar benachbarten Kanälen in Zeilenerstreckungsrichtung mit ihren Teilgesichtsfeldern das Gesamtgesichtsfeld vollständig abdecken, und dass eine weitere Gruppe einander unmittelbar benachbarter Kanäle das Gesamtgesichtsfeld ihrerseits vollständig abdecken.

Obige Ausführungsbeispiele lassen sich also in Form einer Multiaperturabbildungsvorrichtung und/oder einer eine derartige Multiaperturabbildungsvorrichtung umfassenden Vorrichtung implementieren, und zwar mit einzeiliger Kanalanordnung, wobei jeder Kanal ein Teilgesichtsfeld eines Gesamtgesichtsfeld überträgt und sich die Teilgesichtsfelder teilweise überlappen. Ein Aufbau mit mehreren solcher Multiaperturabbildungsvorrichtungen für Stereo- Trio-, Quattro usw. Aufbauten für die 3D-Bildaufnahme ist möglich. Die Mehrzahl von Modulen kann dabei als eine zusammenhängende Zeile ausgeführt sein. Die zusammenhängende Zeile könnte identische Aktoren und ein gemeinsames Strahlumlenkelement nutzen. Ein oder mehrere eventuell im Strahlengang vorhandene verstärkende Substrate können sich über die gesamte Zeile, die einen Stereo-, Trio, Quattro-Aufbau bilden kann, erstrecken. Es können Verfahren der Superresolution genutzt werden, wobei mehrere Kanäle dieselben Teilbildbereiche abbilden. Die optischen Achsen können auch bereits ohne Strahlumlenkvorrichtung divergent verlaufen, so dass weniger Facetten auf der Strahlumlenkeinheit benötigt werden. Die Facetten besitzen dann vorteilhafter Weise nur eine Winkelkomponente. Der Bildsensor kann einteilig sein, nur eine zusammenhängende Pixelmatrix oder mehrere unterbrochene aufweisen. Der Bildsensor kann aus vielen Teilsensoren zusammengesetzt sein, die z.B. auf einer Leiterplatte nebeneinander angeordnet sind. Ein Autofokusantrieb kann so ausgeführt sein, dass das Strahlumlenkelement synchron mit den Optiken bewegt wird, oder ruhend ist.

Prinzipiell können beliebig viele Teilmodule umfassend Bildsensor(en), Abbildungsoptik(en) und Spiegel-Array(s) angeordnet werden. Teilmodule können auch als ein System aufgebaut sein. Die Teilmodule oder Systeme können in einem Gehäuse, wie einem Smartphone verbaut sein. Die Systeme können in einer oder mehreren Zeilen und/oder Reihen und an einer beliebigen Stelle angeordnet sein. Beispielsweise können zwei Abbildungsvorrichtungen 16 in dem Gehäuse 12 angeordnet sein, um eine stereoskopische Erfassung eines Gesichtsfeldes zu ermöglichen.

Gemäß weiteren Ausführungsbeispielen umfasst die Vorrichtung 70 weitere Multiaperturabbildungsvorrichtungen 16, so dass das Gesamtgesichtsfeld 60 mit mehr als zwei Multiaperturabbildungsvorrichtungen abtastbar ist. Dies ermöglicht eine Anzahl von sich teilweise überlappenden Kanälen, die infolge ihrer kanalweise angepassten Blickrichtungen das Gesamtfeld aufnehmen. Für eine stereoskopische oder eine höhere Ordnung aufweisende Erfassung des Gesamtgesichtsfeldes kann mindestens eine weitere Anordnung von Kanälen gemäß hierin beschriebener Ausführungsbeispiele und/oder der beschriebenen Anordnung von Kanälen angeordnet sein, die als genau eine Zeile oder als separate Module ausgeprägt sein können. Das bedeutet, dass das einzeilige Array mehrzeilig mit einer weiteren Zeile angeordnet sein kann, wobei die weitere Zeile von optischen Kanälen einer weiteren Multiaperturabbildungsvorrichtung zugeordnet werden kann. Die optischen Kanäle der weiteren Zeile können ebenfalls jeweils überlappende Teilbereiche aufnehmen und zusammen das Gesamtgesichtsfeld abdecken. Dies ermöglicht den Erhalt eines Stereo-, Trio-, Quattro-, usw. Aufbaus von Arraykameras, die aus Kanälen bestehen, die teilweise überlappen und innerhalb ihrer Teilgruppierung das Gesamtgesichtsfeld abdecken. In anderen Worten können Multiaperturkameras mit linearer Kanalanordnung mehrere optische Kanäle umfassen, die nebeneinander angeordnet sind und jeweils Teile des Gesamtgesichtsfeldes übertragen. Gemäß Ausführungsbeispielen können vorteilhafterweise ein Spiegel (Strahlumlenkeinrichtung) vor den Abbildungslinsen angeordnet sein, der zur Strahlumlenkung genutzt werden kann und zur Reduzierung der Bauhöhe der Vorrichtung beitragen kann. In Kombination mit einem kanalweise angepassten Spiegel, wie etwa Facettenspiegel, wobei die Facetten plan oder beliebig gekrümmt oder mit einer Freiformfläche versehen sein können, kann es vorteilhaft sein, die Abbildungsoptiken der Kanäle im Wesentlichen identisch aufzubauen, wohingegen die Blickrichtungen der Kanäle durch die einzelnen Facetten des Spiegelarrays beeinflusst oder vorgegeben sind. In Kombination mit einem planen (eben ausgebildeten) Spiegel können die Abbildungsoptiken der Kanäle unterschiedlich ausgebildet oder ausgeprägt sein, so dass sich unterschiedliche Blickrichtungen ergeben. Der Ablenkspiegel (Strahlumlenkvorrichtung) kann drehbar gelagert sein, wobei die Drehachse senkrecht zu den optischen Kanälen, d.h. parallel zu der Zeilenerstreckungsrichtung, der Kanäle verlaufen kann. Der Ablenkspiegel kann beidseitig reflektiv sein, wobei metallische oder dielektrische Schichten oder Schichtfolgen angeordnet sein können, um eine Reflektivität zu erhalten. Eine Drehung oder translatorische Verschiebung des Spiegels kann analog oder bistabil oder mehrfach stabil erfolgen. Als stabil kann verstanden werden, wenn zur Bewegung entlang einer vorhergesehenen Richtung eine Kraft aufzuwenden ist, wobei ein Unterschreiten der Kraft zu einem verharren oder einer Rückbewegung der Strahlumlenkeinrichtung führen kann.

Die analoge Drehung (Rotationsbewegung 52) kann für eine eindimensionale Anpassung der Bildlage genutzt werden, was als optische Bildstabilisierung verstanden werden kann. Beispielsweise kann hierbei eine Bewegung um nur wenige Grad ausreichend sein, beispielsweise ≤ 15°, ≤ 10° oder ≤ 1°. Die bistabile oder mehrfach stabile Drehung des Spiegels kann für das Umschalten der Blickrichtung der Kamera genutzt werden. So kann beispielsweise zwischen den Blickrichtungen vor, neben und hinter dem Display umgeschaltet werden. Analoge und bistabile/mehrfach stabile Bewegungen oder Positionen können kombinierbar, d.h. überlagerbar sein. Beispielsweise können durch hierin beschriebene Ausführungsbeispiele Lösungen in tragbaren Vorrichtungen, wie etwa Smartphones, die zwei Kameras mit voneinander verschiedener Blickrichtung nach vorne und nach hinten nutzen, durch einen Aufbau ersetzt werden, der lediglich eine Abbildungsvorrichtung umfasst. Der Aufbau kann sich in Abgrenzungen zu bekannten Lösungen beispielsweise dadurch auszeichnen, dass das Sichtfenster im Gehäuse für die Kameras mit Blickrichtung nach vorne und nach hinten an derselben Position, d.h. gegenüberliegend in oberer oder unterer Gehäuseabdeckung angeordnet ist. Bereiche dieser Gehäuseabdeckungen, die für den Strahldurchgang angeordnet sind, können transparent sein und können für den Fall der Nutzung sichtbaren Lichts aus Glas und/oder Polymeren bestehen oder diese umfassen.

Obwohl vorangegangen beschriebene Ausführungsbeispiele so beschrieben sind, dass die Vorrichtung einen ersten und einen zweiten Betriebszustand aufweist, können gemäß weiteren Ausführungsbeispielen weitere Betriebszustände zur Erfassung weiterer, d.h. zumindest eines dritten Gesichtsfeldes, angeordnet sein.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (10; 20; 30) mit:
einem Gehäuse (12) mit einem ersten transparenten Bereich (14a) und einem zweiten transparenten Bereich (14b);
einer Multiaperturabbildungsvorrichtung (16; 16a-b), die in einem Inneren des Gehäuses (12) angeordnet ist und eine Strahlumlenkeinrichtung (18) umfasst;
einer ersten Blende (24a) und einer zweiten Blende (24b);
wobei die tragbare Vorrichtung (10; 20) einen ersten Betriebszustand und einen zweiten Betriebszustand aufweist;
wobei in dem ersten Betriebszustand die Strahlumlenkeinrichtung (18) einen Strahlengang (22) der Multiaperturabbildungsvorrichtung (16; 16a-b) so umlenkt, dass dieser durch den ersten transparenten Bereich (14a) verläuft, und die zweite Blende (24b) den zweiten transparenten Bereich (14b) optisch zumindest teilweise verschließt, wodurch für die Vorrichtung eine erste Blickrichtung hin zu einem ersten Gesamtgesichtsfeld eingestellt wird;
wobei in dem zweiten Betriebszustand die Strahlumlenkeinrichtung (18) den Strahlengang (22) der Multiaperturabbildungsvorrichtung (16; 16a-b) so umlenkt, dass dieser durch den zweiten transparenten Bereich (14b) verläuft, und die erste Blende (24a) den ersten transparenten Bereich (14a) optisch zumindest teilweise verschließt, wodurch für die Vorrichtung eine zweite Blickrichtung hin zu einem zweiten Gesamtgesichtsfeld eingestellt wird;
wobei das Umschalten zwischen dem ersten Betriebszustand und dem zweiten Betriebszustand auf einer Rotationsbewegung (28) der Strahlumlenkeinrichtung (18) basiert;
wobei optische Kanäle der Multiaperturabbildungsvorrichtung von der Strahlumlenkeinrichtung (18) basierend auf einer eingestellten Blickrichtung hin zu entweder dem ersten Gesamtgesichtsfeld oder dem zweiten Gesamtgesichtsfeld gelenkt werden und innerhalb der eingestellten Blickrichtung einen Winkel zueinander aufweisen, so dass die optischen Kanäle in höchstens teilweise überlappende Teilgesichtsfelder des jeweiligen Gesamtgesichtsfeldes gelenkt werden; und
wobei optische Kanäle jeweils eine oder mehrere Optiken zum Verändern eines Strahlengangs der Abbildungsvorrichtung und einen Bildsensorbereich aufweisen und von der Strahlumlenkeinrichtung in Richtung der eingestellten Blickrichtung umgelenkt werden.

2. Vorrichtung gemäß Anspruch 1, bei der die Strahlumlenkeinrichtung beidseitig reflektiv gebildet ist.

3. Vorrichtung gemäß einem der vorangehenden Ansprüche, wobei die erste Blende und die zweite Blende für zumindest zwei optische Kanäle der Multiaperturabbildungsvorrichtung wirksam ist.

4. Vorrichtung gemäß einem der vorangehenden Ansprüche, wobei die mobile Vorrichtung eine Anzeige (33) umfasst und wobei die erste Blende (24a) oder die zweite Blende (24b) in einem Bereich der Anzeige (33) angeordnet ist.

5. Vorrichtung gemäß Anspruch 4, wobei in einem Bereich der Anzeige (33), in dem die erste (24a) oder zweite Blende (24b) angeordnet ist, zumindest zeitweise eine Information der Anzeige (33) darstellbar ist.

6. Vorrichtung gemäß einem der vorangehenden Ansprüche, wobei das Gehäuse (12) flach gebildet ist und zumindest eine erste Ausdehnung entlang einer ersten Gehäuserichtung (x) und eine zweite Ausdehnung entlang einer zweiten Gehäuserichtung (y) mindestens eine dreifache Abmessung verglichen mit einer dritten Ausdehnung entlang einer dritten Gehäuserichtung (z) aufweist.

7. Vorrichtung gemäß einem der vorangehenden Ansprüche, wobei der erste transparente Bereich (14a) und der zweite transparente Bereich (14b) gegenüberliegend angeordnet sind.

8. Vorrichtung gemäß einem der vorangehenden Ansprüche, wobei die Multiaperturabbildungsvorrichtung (16; 16a-b) ein einzeiliges Array (38) von nebeneinander angeordneten optischen Kanäle (42a-d) aufweist.

9. Vorrichtung gemäß Anspruch 8, wobei die Strahlumlenkeinrichtung (18) eine erste Stellung und eine zweite Stellung aufweist zwischen denen die Strahlumlenkeinrichtung (18) entlang einer Zeilenerstreckungsrichtung (56) des einzeiligen Arrays (38) translatorisch bewegbar ist, wobei die Strahlumlenkeinrichtung (18) so ausgebildet ist, dass sie in der ersten Stellung und in der zweiten Stellung den Strahlengang (22-1 - 22-4) jedes optischen Kanals (42a-d) in eine voneinander verschiedene Richtung umlenkt.

10. Vorrichtung gemäß Anspruch 9, wobei die Multiaperturabbildungsvorrichtung (16; 16a-b) ferner einen optischen Bildstabilisator (46) zur Bildstabilisierung entlang einer Bildachse (58) durch Erzeugen einer Rotationsbewegung (52) der Strahlumlenkeinrichtung (18) aufweist.

11. Vorrichtung gemäß einem der vorangegangenen Ansprüche, die zumindest eine weitere Multiaperturabbildungsvorrichtung (16b) aufweist, wobei die Vorrichtung ausgebildet ist, um ein Gesamtgesichtsfeld zumindest stereoskopisch zu erfassen.

12. Vorrichtung gemäß einem der vorangehenden Ansprüche, wobei die Multiaperturabbildungsvorrichtung (16; 16a-b) eine Fokuseinrichtung zum Verändern eines Fokus aufweisen, wobei die Fokuseinrichtung einen Aktor (48a-b) zum Bereitstellen einer Relativbewegung zwischen einer Optik (41a-d) von optischen Kanälen (42a-d) der Multiaperturabbildungsvorrichtung (16; 16a-b) und einem Bildsensor (36) der Multiaperturabbildungsvorrichtung, umfasst.

13. Vorrichtung gemäß Anspruch 12, wobei die Fokuseinrichtung ausgebildet ist, um die Relativbewegung unter Ausführung einer zu der Relativbewegung simultanen Bewegung der Strahlumlenkeinrichtung (18) auszuführen.

14. Vorrichtung gemäß einem der vorangehenden Ansprüche, wobei die Multiaperturabbildungsvorrichtung (16; 16a-b) einen transparenten Träger (39) umfasst, wobei optische Kanäle der Multiaperturabbildungsvorrichtung den transparenten Träger (39) zwischen der Strahlumlenkeinrichtung (18) und einem Bildsensor (36) der Multiaperturabbildungsvorrichtung (16; 16a-b) durchqueren.

15. Verfahren zum Bereitstellen einer Vorrichtung mit folgenden Schritten:
Bereitstellen eines Gehäuses mit einem ersten transparenten Bereich und einem zweiten transparenten Bereich;
Anordnen einer Multiaperturabbildungsvorrichtung, die eine Strahlumlenkeinrichtung umfasst, in einem Inneren des Gehäuses;
Anordnen einer ersten Blende und einer zweiten Blende;
so dass die tragbare Vorrichtung einen ersten Betriebszustand und einen zweiten Betriebszustand aufweist;
so dass in dem ersten Betriebszustand die Strahlumlenkeinrichtung einen Strahlengang der Abbildungsvorrichtung so umlenkt, dass dieser durch den ersten transparenten Bereich verläuft, und die zweite Blende den zweiten transparenten Bereich optisch zumindest teilweise verschließt, wodurch für die Vorrichtung eine erste Blickrichtung hin zu einem ersten Gesamtgesichtsfeld eingestellt wird;
so dass in dem zweiten Betriebszustand die Strahlumlenkeinrichtung den Strahlengang der Abbildungsvorrichtung so umlenkt, dass dieser durch den zweiten transparenten Bereich verläuft, und die erste Blende den ersten transparenten Bereich optisch zumindest teilweise verschließt, wodurch für die Vorrichtung eine zweite Blickrichtung hin zu einem zweiten Gesamtgesichtsfeld eingestellt wird;
so dass das Umschalten zwischen dem ersten Betriebszustand und dem zweiten Betriebszustand auf einer Rotationsbewegung (28) der Strahlumlenkeinrichtung (18) basiert;
so dass optische Kanäle der Multiaperturabbildungsvorrichtung von der Strahlumlenkeinrichtung (18) basierend auf einer eingestellten Blickrichtung hin zu entweder dem ersten Gesamtgesichtsfeld oder dem zweiten Gesamtgesichtsfeld gelenkt werden und innerhalb einer Blickrichtung einen Winkel zueinander aufweisen, so dass die optischen Kanäle in höchstens teilweise überlappende Teilgesichtsfelder des jeweiligen Gesamtgesichtsfeldes gelenkt werden; und
so dass optische Kanäle jeweils eine oder mehrere Optiken zum Verändern eines Strahlengangs der Abbildungsvorrichtung und einen Bildsensorbereich aufweisen und von der Strahlumlenkeinrichtung in Richtung der eingestellten Blickrichtung umgelenkt werden.

## Claims

1. A device (10; 20; 30) comprising:
a housing (12) having a first transparent area (14a) and a second transparent area (14b);
a multi-aperture imaging device (16; 16a-b) arranged inside the housing (12) and including beam-deflecting means (18);
a first diaphragm (24a) and a second diaphragm (24b);
the portable device (10; 20) having a first operating state and a second operating state;
wherein in the first operating state, the beam-deflecting means (18) deflects an optical path (22) of the multi-aperture imaging device (16; 16a-b) such that it passes through the first transparent area (14a) and that the second diaphragm (24b) at least partly optically closes the second transparent area (14b), thereby setting a first viewing direction toward a first total field of view for the device; and
wherein in the second operating state, the beam-deflecting means (18) deflects the optical path (22) of the multi-aperture imaging device (16; 16a-b) such that it passes through the second transparent area (14b) and that the first diaphragm (24a) at least partly optically closes the first transparent area (14a), thereby setting a second viewing direction toward a second total field of view for the device;
wherein switching between the first operating state and the second operating state is based on a rotational movement (28) of the deflecting means (18);
wherein optical channels of the multi-aperture imaging device are directed by the beam-deflecting means (18) on the basis of a set viewing direction toward either the first total field of view or the second total field of view and have angles in relation to one another within the set viewing direction, so that the optical channels are directed into partial fields of view of the respective total field of view which, at the most, only partly overlap; and
wherein optical channels each comprise one or several optics for changing an optical path of the imaging device and an image sensor area and are deflected by the beam-deflecting means in the direction towards the set viewing direction.

2. The device as claimed in claim 1, wherein the beam-deflecting means is formed to be reflective on both sides.

3. The device as claimed in any of the preceding claims, wherein the first diaphragm and the second diaphragm are effective for at least two optical channels of the multi-aperture imaging device.

4. The device as claimed in any of the preceding claims, the mobile device including a display (33), and the first diaphragm (24a) or the second diaphragm (24b) being arranged in an area of the display (33).

5. The device as claimed in claim 4, wherein information of the display (33) can be at least periodically presented in an area of the display (33) within which the first (24a) or the second diaphragm (24b) is arranged.

6. The device as claimed in any of the preceding claims, wherein the housing (12) is formed to be flat and wherein at least a first extension along a first housing direction (x) and a second extension along a second housing direction (y) comprise at least three times the dimension of a third extension along a third housing direction (z).

7. The device as claimed in any of the preceding claims, wherein the first transparent area (14a) and the second transparent area (14b) are oppositely arranged.

8. The device as claimed in any of the previous claims, wherein the multi-aperture imaging device (16; 16a-b) comprises a one-line array (38) of adjacently arranged optical channels (42a-d).

9. The device as claimed in claim 8, wherein the beam-deflecting means (18) comprises a first position and a second position between which the beam-deflecting means (18) is translationally moveable along a line extension direction (56) of the one-line array (38), the beam-deflecting means (18) being configured such that it deflects the optical path (22-1 to 22-4) of each optical channel (42a-d) into mutually different directions depending on whether it is located in the first position or in the second position.

10. The device as claimed in claim 9, wherein the multi-aperture imaging device (16; 16a-b) further comprises an optical image stabilizer (46) for image stabilization along an image axis (58) by generating a rotational movement (52) of the beam-deflecting means (18).

11. The device as claimed in any of the preceding claims, comprising at least one further multi-aperture imaging device (16b), the device being configured to at least stereoscopically capture a total field of view.

12. The device as claimed in any of the preceding claims, wherein the multi-aperture imaging device (16; 16a-b) comprises focusing means for changing a focus, the focusing means including an actuator (48a-b) for providing a relative movement between optics (41a-d) of optical channels (42a-d) of the multi-aperture imaging device (16; 16a-b) and an image sensor (36) of the multi-aperture imaging device.

13. The device as claimed in claim 12, wherein the focusing means is configured to perform the relative movement while performing a movement, simultaneous with said relative movement, of the beam-deflecting means (18).

14. The device as claimed in any of the preceding claims, wherein the multi-aperture imaging device (16; 16a-b) includes a transparent carrier (39), wherein optical channels of the multi-aperture imaging device traverse the transparent carrier (39) between the beam-deflecting means (18) and an image sensor (36) of the multi-aperture imaging device (16; 16a-b).

15. A method of providing a device, comprising:
providing a housing having a first transparent area and a second transparent area;
arranging a multi-aperture imaging device, which includes beam-deflecting means, inside the housing;
arranging a first diaphragm and a second diaphragm;
so that the portable device has a first operating state and a second operating state;
so that in the first operating state, the beam-deflecting means deflects an optical path of the imaging device such that it passes through the first transparent area and that the second diaphragm at least partly optically closes the second transparent area, thereby setting a first viewing direction toward a first total field of view for the device; and
so that in the second operating state, the beam-deflecting means deflects the optical path of the imaging device such that it passes through the second transparent area and that the first diaphragm at least partly optically closes the first transparent area; thereby setting a second viewing direction toward a second total field of view for the device;
so that switching between the first operating state and the second operating state is based on a rotational movement (28) of the deflecting means (18);
so that optical channels of the multi-aperture imaging device are directed by the beam-deflecting means (18) on the basis of a set viewing direction toward either the first total field of view or the second total field of view and have angles in relation to one another within a viewing direction, so that the optical channels are directed into partial fields of view of the respective total field of view which, at the most, only partly overlap; and
so that optical channels each comprise one or several optics for changing an optical path of the imaging device and an image sensor area and are deflected by the beam-deflecting means in the direction towards the set viewing direction.

## Revendications

1. Dispositif (10; 20; 30) avec:
un boîtier (12) avec une première zone transparente (14a) et une deuxième zone transparente (14b);
un dispositif de reproduction à ouvertures multiples (16; 16a-b) qui est disposé à l'intérieur du boîtier (12) et comporte un moyen de déviation de faisceau (18);
un premier diaphragme (24a) et un deuxième diaphragme (24b);
dans lequel le dispositif portable (10; 20) présente un premier état de fonctionnement et un deuxième état de fonctionnement;
dans lequel, dans le premier état de fonctionnement, le moyen de déviation de faisceau (18) dévie un trajet de faisceau (22) du dispositif de reproduction à ouvertures multiples (16; 16a-b) de sorte qu'il traverse la première zone transparente (14a), et le deuxième diaphragme (24b) obture optiquement au moins partiellement la deuxième zone transparente (14b), d'où est réglée pour le dispositif une première direction de vision vers un premier champ de vision global;
dans lequel, dans le deuxième état de fonctionnement, le moyen de déviation de faisceau (18) dévie le trajet de faisceau (22) du dispositif de reproduction à ouvertures multiples (16; 16a-b) de sorte qu'il traverse la deuxième zone transparente (14b), et le premier diaphragme (24a) obture optiquement au moins partiellement la première zone transparente (14a), d'où est réglée pour le dispositif une deuxième direction de vision vers un deuxième champ de vision global;
dans lequel la commutation entre le premier état de fonctionnement et le deuxième état de fonctionnement est basée sur un mouvement de rotation (28) du moyen de déviation de faisceau (18);
dans lequel les canaux optiques du dispositif de reproduction à ouvertures multiples sont dirigés par le moyen de déviation de faisceau (18) sur base d'une direction de vision réglée vers soit le premier champ de vision global, soit le deuxième champ de vision global et présentent un angle entre eux dans la direction de vision réglée, de sorte que les canaux optiques soient dirigés dans des champs de vision partiels se chevauchant tout au plus partiellement du champ de vision global respectif; et
dans lequel les canaux optiques présentent, chacun, une ou plusieurs optiques destinées à modifier un trajet de faisceau du dispositif de reproduction et une zone de capteur d'image et sont déviés par le moyen de déviation de faisceau en direction de la direction de vision réglée.

2. Dispositif selon la revendication 1, dans lequel le moyen de déviation de faisceau est formé réfléchissant des deux côtés.

3. Dispositif selon l'une des revendications précédentes, dans lequel le premier diaphragme et le deuxième diaphragme sont effectifs pour au moins deux canaux optiques du dispositif de reproduction à ouvertures multiples.

4. Dispositif selon l'une des revendications précédentes, dans lequel le dispositif mobile comporte un écran d'affichage (33) et dans lequel le premier diaphragme (24a) ou le deuxième diaphragme (24b) est disposé dans une zone de l'écran d'affichage (33).

5. Dispositif selon la revendication 4, dans lequel peut être représenté, dans une zone de l'écran d'affichage (33) dans laquelle est disposé le premier (24a) ou le deuxième diaphragme (24b), au moins temporairement une information de l'écran d'affichage (33).

6. Dispositif selon l'une des revendications précédentes, dans lequel le boîtier (12) est réalisé plat et au moins une première extension dans une première direction de boîtier (x) et une deuxième extension dans une deuxième direction de boîtier (y) présentent au moins une triple dimension en comparaison avec une troisième extension dans une troisième direction de boîtier (z).

7. Dispositif selon l'une des revendications précédentes, dans lequel la première zone transparente (14a) et la deuxième zone transparente (14b) sont disposées l'une face à l'autre.

8. Dispositif selon l'une des revendications précédentes, dans lequel le dispositif de reproduction à ouvertures multiples (16; 16a-b) présente un réseau d'une seule rangée (38) de canaux optiques disposés adjacents (42a à d).

9. Dispositif selon la revendication 8, dans lequel le moyen de déviation de faisceau (18) présente une première position et une deuxième position entre lesquelles le moyen de déviation de faisceau (18) peut être déplacé en translation dans une direction d'extension de rangée (56) du réseau d'une seule rangée (38), dans lequel le moyen de déviation de faisceau (18) est conçu de sorte qu'il dévie, dans la première position et dans la deuxième position, le trajet du faisceau (22-1 à 22-4) de chaque canal optique (42a à d) dans une direction différente l'un de l'autre.

10. Dispositif selon la revendication 9, dans lequel le dispositif de reproduction à ouvertures multiples (16; 16a-b) présente par ailleurs un stabilisateur d'image optique (46) destiné à stabiliser l'image le long d'un axe d'image (58) en générant un mouvement de rotation (52) du moyen de déviation de faisceau (18).

11. Dispositif selon l'une des revendications précédentes, présentant au moins un autre dispositif de reproduction à plusieurs ouvertures (16b), dans lequel le dispositif est conçu pour capturer au moins de manière stéréoscopique un champ de vision global.

12. Dispositif selon l'une des revendications précédentes, dans lequel le dispositif de reproduction à plusieurs ouvertures (16; 16a-b) présente un moyen de focalisation destiné à modifier un foyer, dans lequel le moyen de focalisation comporte un actionneur (48a-b) destiné à permettre un mouvement relatif entre une optique (41a à d) de canaux optiques (42a à d) du dispositif de reproduction à ouvertures multiples (16; 16a-b) et un capteur d'image (36) du dispositif de reproduction à ouvertures multiples.

13. Dispositif selon la revendication 12, dans lequel le moyen de focalisation est conçu pour effectuer le mouvement relatif en effectuant un mouvement du moyen de déviation de faisceau (18) simultané avec le mouvement relatif.

14. Dispositif selon l'une des revendications précédentes, dans lequel le dispositif de reproduction à ouvertures multiples (16; 16a-b) comporte un support transparent (39), dans lequel les canaux optiques du dispositif de reproduction à ouvertures multiples traversent le support transparent (39) entre le moyen de déviation de faisceau (18) et un capteur d'image (36) du dispositif de reproduction à ouvertures multiples (16; 16a-b).

15. Procédé pour mettre à disposition un dispositif, aux étapes suivantes consistant à:
prévoir un boîtier avec une première zone transparente et une deuxième zone transparente;
disposer un dispositif de reproduction à ouvertures multiples qui comporte un moyen de déviation de faisceau à l'intérieur du boîtier;
disposer un premier diaphragme et un deuxième diaphragme;
de sorte que le dispositif portable présente un premier état de fonctionnement et un deuxième état de fonctionnement;
de sorte que, dans le premier état de fonctionnement, le moyen de déviation de faisceau dévie un trajet de faisceau du dispositif de reproduction de sorte qu'il traverse la première zone transparente, et que le deuxième diaphragme obture optiquement au moins partiellement la deuxième zone transparente, d'où est réglée pour le dispositif une première direction de vision vers un premier champ de vision global;
de sorte que, dans le deuxième état de fonctionnement, le moyen de déviation de faisceau dévie le trajet de faisceau du dispositif de reproduction de sorte qu'il traverse la deuxième zone transparente, et que le premier diaphragme obture optiquement au moins partiellement la première zone transparente, d'où est réglée pour le dispositif une deuxième direction de vision vers un deuxième champ de vision global;
de sorte que la commutation entre le premier état de fonctionnement et le deuxième état de fonctionnement soit basée sur un mouvement de rotation (28) du moyen de déviation de faisceau (18);
de sorte que les canaux optiques du dispositif de reproduction à ouvertures multiples soient dirigés par le moyen de déviation de faisceau (18) sur base d'une direction de vision réglée vers soit le premier champ de vision global, soit le deuxième champ de vision global et présentent, dans une direction de vision, un angle entre eux, de sorte que les canaux optiques soient dirigés dans des champs de vision partiels se chevauchant tout au plus partiellement du champ de vision global respectif; et
de sorte que les canaux optiques présentent, chacun, une ou plusieurs optiques destinées à modifier un trajet de faisceau du dispositif de reproduction et une zone de capteur d'image et soient déviés par le moyen de déviation de faisceau en direction de la direction de vision réglée.
